# EUROPEAN PATENT APPLICATION

(11) **EP 2 343 208 A1**
(43) Date of publication of application: **13.07.2011**
(21) Application number: 09817419.6
(22) Date of filing: 17.09.2009
(51) Int. Cl.: B60K 35/00

(54) **DEVICE FOR INSTRUCTING DRIVER TO PERFORM DRIVE OPERATION FOR ENHANCING FUEL EFFICIENCY**

(30) Priority: 30.09.2008 JP 2008253181
(71) Applicant: Honda Motor Co., Ltd., Minato-ku Tokyo 107-8556 (JP)
(72) Inventor: ENOMOTO, Keiji, Wako-shi Saitama 351-0193 (JP); FUJIKI, Yuji, Wako-shi Saitama 351-0193 (JP); TAKEMOTO, Hideharu, Wako-shi Saitama 351-0193 (JP)
(74) Representative: Prechtel, Jörg
(86) International application number: PCT/JP2009/004700
(87) International publication number: WO 2010/038376

(57) **Abstract**

Advice on fuel efficiency is provided for each driving operation. A storage is provided for, for each driving operation to be performed by a driver of the vehicle and each state of fuel efficiency corresponding to each driving operation, storing at least one advice message indicating an advice about the state of fuel efficiency. For each driving operation performed by the driver of the vehicle, a state of fuel efficiency of the vehicle according to the performed driving operation is determined. In response to any driving operation being selected on a predetermined display screen, the storage is referred to based on the selected driving operation and the determined state of fuel efficiency for the selected driving operation to read and display an advice message corresponding to the selected driving operation and the determined state of fuel efficiency. For each driving operation, a driver can receive an advice on the fuel efficiency of his/her driving operation.

## Description

### TECHNICAL FIELD

The present invention relates to an apparatus for coaching a driver for driving operation to improve the fuel efficiency.

### BACKGROUND ART

Recently, consciousness of users regarding the fuel efficiency is increased. There is a tendency to prefer fuel-efficient driving. The fuel efficiency of a vehicle is typically expressed by a travel distance per unit amount of fuel consumption. Japanese Patent Application Laid-Open No. 2003-42000 discloses a technique for comparing a current fuel efficiency with a predetermined target fuel efficiency to determine whether the current fuel efficiency is good or not. A driver is notified of the determination result.

Further, Japanese Patent Application Laid-Open No. 2007-256158 discloses a technique for, according to a state of fuel efficiency, changing at least one of the intensity and tone of a display indicating the fuel efficiency. For example, the intensity and/or tone are changed every time the fuel efficiency is deteriorated by a predetermined value.

### DISCLOSURE OF THE INVENTION

### Problems to be Solved by the Invention

The above techniques inform a driver whether the current fuel efficiency is good or not with respect to an optimum fuel efficiency or whether the fuel efficiency deteriorates or not using the intensity and/or tone. However, such "information" is just notification of whether the current fuel efficiency is good or not. Such "information" does not provide the driver with information regarding what driving operation deteriorates the fuel efficiency or how to improve the driving operation so as to improve the fuel efficiency. Therefore, even if the driver receives such "information", it is difficult that the driver learns the driving operation for improving the fuel efficiency.

Accordingly, there is a demand for a technique capable of providing a driver with an advice on how to perform the driving operation so as to further improve the fuel efficiency.

### SUMMARY OF THE INVENTION

In accordance with one aspect of the invention, an apparatus mounted on a vehicle comprises a storage for, for each driving operation to be performed by a driver of the vehicle and each state of fuel efficiency corresponding to each driving operation, storing at least one advice message indicating an advice about the state of fuel efficiency. The apparatus determines, for each driving operation performed by the driver of the vehicle, a state of fuel efficiency of the vehicle according to the performed driving operation. In response to a driving operation being selected on a predetermined display screen, the storage is referred to based on the selected driving operation and the determined state of fuel efficiency for the selected driving operation. An advice message corresponding to the selected driving operation and the determined state of fuel efficiency is read and displayed.

According to the invention, for each driving operation performed by a driver, the driver can cause an advice message to be displayed indicating an advice on the state of fuel efficiency according to his/her driving operation. Therefore, the driver can receive an advice from the viewpoint of fuel efficiency for the driving operation which he/she has performed. For example, the driver can easily learn how to improve each of the accelerator operation, brake operation and vehicle stopping operation leading to the idling operation so as to improve the fuel efficiency.

Other features and advantages of the invention will become apparent from the following detailed description.

### BRIEF DESCRIPTION OF THE DRAWINGS

FIG. 1 illustrates a layout of display units and a display apparatus on an instrument panel according to an embodiment of the invention;
FIG. 2 illustrates displays on a first display unit and a second display unit in an embodiment of the invention;
FIG. 3 illustrates changes in displays on the first display unit and the second display unit according to an accelerator operation and a brake operation in an embodiment of the invention;
FIG. 4 is a block diagram illustrating an apparatus for coaching for a driving operation in an embodiment of the invention;
FIG. 5 is a view for explaining a technique for determining a bar length and a background color according to an accelerator operation in an embodiment of the invention;
FIG. 6 is a view for explaining another technique for determining a background color according to an accelerator operation in an embodiment of the invention;
FIG. 7 is a view for explaining a technique for determining a score according to an accelerator operation in an embodiment of the invention;
FIG. 8 is a view for explaining a technique for determining a bar length and a background color according to a brake operation in an embodiment of the invention;
FIG. 9 is a view for explaining a technique for determining a score according to a brake operation in an embodiment of the invention;
FIG. 10 is a view for explaining a technique for determining a score according to an idling operation in an embodiment of the invention;
FIG. 11 illustrates an example of a transition of a score according to each driving operation and an integrated value of the score in an embodiment of the invention;
FIG. 12 illustrates a map that is used for converting a total score in a driving cycle into a total score converted value in an embodiment of the invention;
FIG. 13 illustrates an example of a transition of a lifetime score in an embodiment of the invention;
FIG. 14 illustrates a display on a second display unit when ignition is turned off in an embodiment of the invention;
FIG. 15 illustrates maps used for an accelerator operation for first, second, and third stages in an embodiment of the invention;
FIG. 16 is a view for explaining changes in a bar length between first, second, and third stages according to an accelerator operation in an embodiment of the invention;
FIG. 17 illustrates maps used for a brake operation for first, second, and third stages in an embodiment of the invention;
FIG. 18 is a view for explaining changes in a bar length between first, second, and third stages according to a brake operation in an embodiment of the invention;
FIG. 19 is a flowchart for displaying a state of fuel efficiency and determining a score according to a driving operation in an embodiment of the invention;
FIG. 20 is a map for determining a state of a vehicle speed in an embodiment of the present invention;
FIG. 21 is a schematic diagram illustrating a message table in an embodiment of the present invention;
FIG. 22 illustrates an example of a basic screen displayed on a display apparatus in an embodiment of the present invention;
FIG. 23 illustrates an evaluation regarding fuel efficiency of a driving cycle displayed on a display apparatus in an embodiment of the present invention;
FIG. 24 illustrates an example of an evaluation and an advice message regarding fuel efficiency of accelerator operation displayed on a display apparatus in an embodiment of the present invention;
FIG. 25 illustrates an example of an evaluation and an advice message regarding fuel efficiency of brake operation displayed on a display apparatus in an embodiment of the present invention;
FIG. 26 illustrates an example of an evaluation and an advice message regarding fuel efficiency of idling operation displayed on a display apparatus in an embodiment of the present invention;
FIG. 27 illustrates an advice message for each item regarding fuel efficiency displayed on a display apparatus in an embodiment of the present invention; and
FIG. 28 illustrates a communication system between a vehicle and a server in an embodiment of the present invention.

### DESCRIPTION OF EMBODIMENTS

An exemplary embodiment of the invention will be described below with reference to the drawings.

### [Display Form]

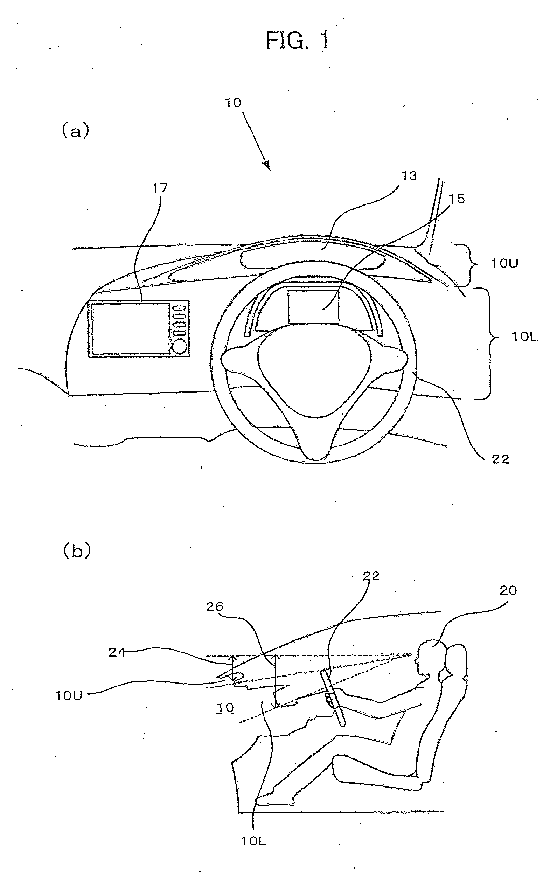

Display forms according to an embodiment of the invention, which is capable of coaching a driver for the driving operation so as to further improve the fuel efficiency, will be described with reference to FIGS. 1 to 3.

FIG. 1(a) schematically shows an instrument panel 10 of a vehicle when the instrument panel 10 is viewed from a driving seat. FIG. 1(b) schematically shows the instrument panel 10 when the instrument panel 10 is viewed from the side of the driving seat. In this embodiment, the instrument panel 10 is a two-tier panel consisting of an upper level 10U and a lower level 10L. A first display unit 13 is s provided in the upper level 10U. A second display unit 15 is provided in the lower level 10L.

As shown in FIGS. 1(a) and 1(b), when a driver 20 is seated in the driving seat, it appears to the driver 20 that the upper level 10U is located above a steering wheel 22. Accordingly, the driver 20 can visually recognize the first display unit 13 in the upper level 10U without being interrupted by the steering wheel 22. As shown in FIG. 1(b), the distance from a viewpoint of the driver to the upper level 10U is longer than to the lower level 10L. That is, the upper level 10U is arranged at a position that is closer to the front side of the vehicle as compared to the lower level 10L. Here, an arrow 24 indicates an amount of movement of driver's line-of-sight for visually recognizing the upper level 10U when the driver 20 drives the vehicle while seeing the front view. An arrow 26 indicates an amount of movement of driver's line-of sight for visually recognizing the lower level 10L when the driver 20 drives the vehicle while seeing the front view. As is clear from a comparison of the arrows 24 and 26, the arrangement of the upper level 10U enables the driver 20 to visually recognize the first display unit 13 in the upper level 10U with the amount of movement of line-of-sight less than the amount of movement of line-of-sight for the second display unit 15 in the lower level 10L.

Alternatively, instead of using the above two-tier instrument panel 10, the first and second display units 13 and 15 may be provided in any positions such that the driver can visually recognize the first and second display units 13 and 15 during driving of the vehicle.

In this embodiment, a display apparatus 17 is provided on the left side of the driver 20 in the lower level 10L of the instrument panel 10. In this embodiment, the display apparatus 17 comprises a touch panel. Various pieces of information can be displayed on the display apparatus 17. In this embodiment, a navigation system is mounted on the vehicle, and pieces of information such as map information provided from the navigation system are displayed on the display apparatus 17.

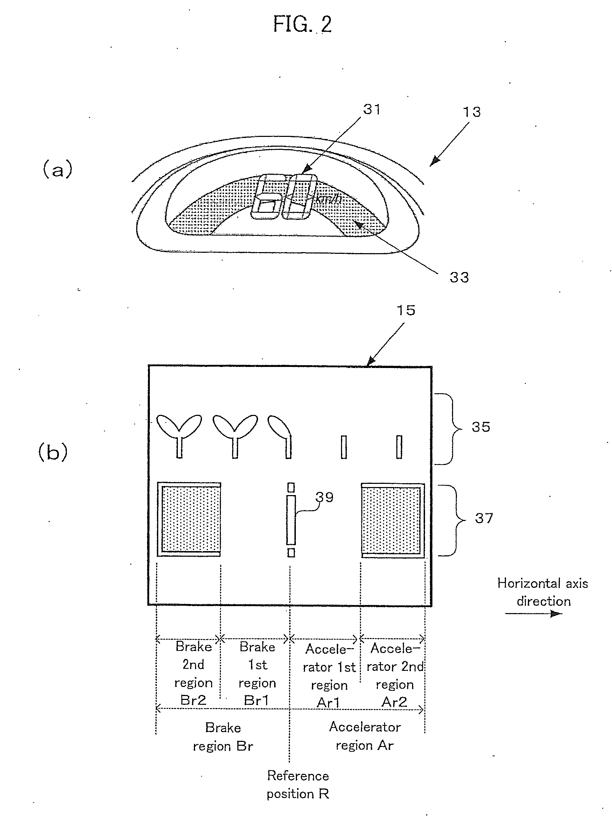

FIG. 2(a) shows a display example on the first display unit 13 of FIG. 1. FIG. 2(b) shows a display example on the second display unit 15 of FIG. 1. The first and second display units 13 and 15 can be implemented by any appropriate display device. For example, the first and second display units 13 and 15 may be implemented by a liquid crystal display device.

The first display unit 13 displays information 31 indicating an operating state of the vehicle. In this embodiment, the information 31 is a vehicle speed. That is, the first display unit 13 acts as a speed meter. However, the information 31 to be displayed is not limited to the vehicle speed. The information 31 may be other information (such as an engine rotational speed of the vehicle).

The first display unit 13 is configured such that a background color 33 of the displayed information 31 is changeable between a first color and a second color. In this embodiment, the first color is green and the second color is blue. The invention is not limited to such color arrangement. The change of the color can be implemented by any technique. For example, Light Emitting Diodes (LEDs) for the first color and an LED for the second color are provided as light sources in the rear of the display screen of the first display unit 13. The color can be changed between the first color and the second color by a well-known gradation control (for example, an intensity of each LED can be controlled by a PWM control).

The first color is established as a color representing a fuel-efficient driving operation. The second color is established as a color representing a fuel-inefficient driving operation. Here, the fuel efficiency is deteriorated when a driving operation such as a sudden acceleration, a sudden deceleration, and an excessively high vehicle speed is performed. Therefore, the first color is established as a color representing a driving operation that does not lead to a sudden acceleration, a sudden deceleration, or an excessively high vehicle speed. Because such a driving operation can be said as a safer operating state, the first color can be said as a color representing a safer driving operation compared to the second color.

The background color 33 is changed according to a state of fuel efficiency in response to a driver's operation for driving the vehicle and/or a driver's operation for braking the vehicle.

In this embodiment, the operation for driving the vehicle (hereinafter referred to as an accelerator operation) includes an operation for driving the vehicle at a constant speed and an operation for accelerating the vehicle. Accordingly, the accelerator operation includes not only an operation by the driver on an accelerator pedal but also an operation for causing a controller mounted on the vehicle to drive the vehicle in response to some operation by the driver. For example, in a case where an automatic cruise controller by which the vehicle automatically travels at a constant speed without operation on the accelerator pedal is mounted on the vehicle, the accelerator operation also includes performing a constant-speed traveling control by activating the automatic cruise controller through, for example, a switch operation.

In this embodiment, the operation for braking the vehicle (hereinafter referred to as a brake operation) indicates an operation for decelerating the vehicle. Accordingly, the brake operation includes not only an operation by the driver on a brake pedal but also an operation for decelerating the vehicle by, for example, activating an engine brake.

In the description, the term "driving operation" is used for the accelerator operation and the brake operation performed by a driver.

The background color 33 is controlled such that the color gets closer to the first color as the driving operation is determined as being more fuel-efficient, and the color gets closer to the second color as the driving operation is determined as being less fuel-efficient. Therefore, a driver can confirm whether his/her driving operation is fuel-efficient by visually recognizing the background color 33. Further, the driver can learn the driving operation for improving the fuel efficiency by paying attention to his/her driving operation such that the background color 33 is not brought close to the second color. Because the driving operation determined as being fuel-efficient is a driving operation where a sudden acceleration, a sudden deceleration, or an excessively high vehicle speed is not generated as described later, the driver can perform a safer driving operation by paying attention to his/her driving operation such that the background color 33 is not brought close to the second color.

As described above, in this embodiment, because the first display unit 13 is provided in the upper level 10U of the instrument panel 10, the driver can visually recognize the first display unit 13 with less amount of movement of line-of-sight when the driver drives the vehicle while seeing in front of the vehicle. Because the driver visually recognizes the background color 33 with ease, the driver can more easily evaluate his/her driving operation from the viewpoint of fuel efficiency.

The second display unit 15 has a score display region 35 in an upper portion and a coaching display region 37 in a lower portion. Although described in detail later, the score display region 35 is a region where a score (point) obtained by evaluating the driving operation from the viewpoint of fuel efficiency is displayed. In this embodiment, the score value is expressed by the number of leaves". The number of leaves is five in the example of the figure. As the score is higher, the number of displayed leaves is increased. A higher score indicates that a fuel-efficient driving operation is continuously performed.

The coaching display region 37 has an accelerator region Ar in the right side and a brake region Br in the left side with respect to a reference position R. A bar 39 is provided at the reference position R, and is extensible toward the accelerator region Ar and brake region Br. The accelerator region Ar is a region used for the accelerator operation (an operation for driving the vehicle as described above). The brake region Br is a region used for the brake operation (an operation for braking the vehicle as described above).

The accelerator region Ar is divided into a region that is not hatched (referred to as a non-hatched region) or an accelerator first region Ar1, and a region that is hatched (referred to as a hatched region) or an accelerator second region Ar2. As with the accelerator region Ar, the brake region Br is divided into a non-hatched region or a brake first region Br1, and a hatched region or a brake second region Br2.

In this embodiment, the length of the accelerator first region Ar1 is equal to the length of the accelerator second region Ar2 in the horizontal axis direction. The length of the brake first region Br1 is equal to the length of the brake second region Br2 in the horizontal axis direction. However, for any of the accelerator region Ar and the brake region Br, the length of the first region may differ from the length of the second region in the horizontal axis direction.

In both the accelerator region Ar and the brake region Br, the first region is established as a region representing a fuel-efficient driving operation, and the second region is established as a region representing a fuel-inefficient driving operation. Here, as described above, the fuel efficiency is deteriorated when a driving operation such as a sudden acceleration, a sudden deceleration, and an excessively high vehicle speed is performed. Therefore, the first region is established as a region representing a driving operation where a sudden acceleration, a sudden deceleration, or an excessively high vehicle speed is not generated. Because such a driving operation is safer, the first region can be said as a region representing a safer driving operation.

A length of the bar 39 extending from the reference position R is changed according to a state of fuel efficiency in response to the accelerator operation and brake operation. The length of the bar 39 is controlled such that it is shorter as the state of fuel efficiency of the driving operation is determined as being better. Therefore, a driver can confirm whether his/her driving operation is fuel-efficient by visually recognizing the length of the bar 39. Further, the driver can learn the driving operation for improving the fuel efficiency by paying attention to his/her driving operation such that the tip of the bar 39 is not brought close to the second region. Because the driving operation determined as being fuel-efficient is a driving operation where a sudden acceleration, a sudden deceleration, or an excessively high vehicle speed is not generated as described later, the driver can perform a safer driving operation by paying attention to his/her driving operation such that the tip of the bar 39 is not brought close to the second region.

Further, the accelerator region Ar and the brake region Br are separately provided, and the bar 39 extends in different directions between the accelerator operation and brake operation. Therefore, a driver can individually and visually evaluate his/her accelerator operation and brake operation with ease. As a result, the driver can easily learn the driving operation for improving the fuel efficiency for each of the accelerator operation and brake operation.

In this embodiment, the right side with respect to the reference position R is used for the accelerator operation while the left side is used for the brake operation. Alternatively, the left side with respect to the reference position R may be used for the accelerator operation while the right side may be used for the brake operation.

In this embodiment, the first and second regions are distinguished from each other by the presence or absence of hatching. However, the present invention is not limited to such hatching as long as a driver can visually distinguish between the first and second regions. For example, the first and second regions may be visually distinguished from each other by coloring, or by drawing a line at a boundary between the first and second regions.

In this embodiment, the accelerator region Ar and the brake region Br are provided in the left and right directions with respect to the reference position R. However, the invention is not limited to the left and right directions. Other directions may be used. For example, the accelerator region Ar may be provided upward from the reference position R while the brake region Br may be provided downward.

Further, the bar 39 may be any graphics whose length is variably changed. The bar 39 is not limited to the shape shown in the figure, and may be implemented by any shape. For example, an arrow, a solid line, a dotted line, or a triangle (such as an isosceles triangle having a base in the reference position) may be used as the displayed graphics. The size of the graphics may be arbitrarily determined. The shape and/or color of the graphics may differ between a case where the bar 39 extends toward the accelerator region Ar and a case where the bar 39 extends toward the brake region Br.

Further, the coaching display region 37 is not limited to the square shape in the figure. The coaching display region 37 may have any shape. For example, a position at which a semi-circle is divided into two quadrants is set as the reference position R. One quadrant may be used as the accelerator region Ar while the other quadrant may be used as the brake region Br. The bar 39 may be configured to extend in a curve parallel to the circumference from the reference position R toward the accelerator region Ar and brake region Br.

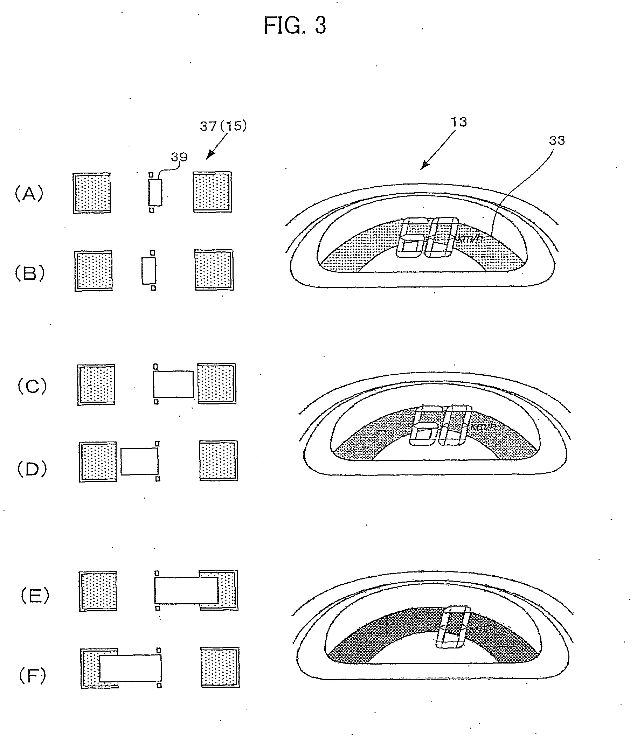

As described above, both the background color 33 of the first display unit 13 and the length of the bar 39 of the second display unit 15 can cause a driver to recognize whether his/her accelerator operation and brake operation are fuel efficient. That is, the background color 33 of the first display unit 13 and the length of the bar 39 of the second display unit 15 cooperate with each other. This cooperation will be described with reference to FIG. 3, where the right side of the figure shows the display on the first display unit 13, and the left side of the figure shows the display of the coaching display region 37 on the second display unit 15. Changes in the background color of the first display unit 13 are expressed by differences in the kind of hatching.

State (A) indicates a state where the vehicle is cruising. For example, this state is implemented by a driver slightly depressing the accelerator pedal. In the figure, the vehicle speed of 60 kilometers per hour is displayed, which is an example. The bar 39 extends rightward because the accelerator operation is performed. The driving operation is determined as being fuel-efficient, and hence the bar 39 extends to be within the accelerator first region Ar1 that is the non-hatched region. By visually recognizing that the bar 39 is within the non-hatched region, a driver can recognize that his/her accelerator operation is a low fuel consumption and safer driving operation. Because the driving operation is determined as being a fuel-efficient accelerator operation, the background color 33 of the first display unit 13 is the first color (in the embodiment, green). By visually recognizing that the background color 33 of the first display unit 13 is the first color, a driver can recognize that his/her accelerator operation is a low fuel consumption and safer driving operation.

State (B) indicates a state where a braking force on the vehicle is small. For example, this state is implemented by a driver slightly depressing the brake pedal. The bar 39 extends leftward because the brake operation is performed. The driving operation is determined as being fuel efficient, and hence the bar 39 extends to be within the brake first region Br1 that is the non-hatched region. By visually recognizing that the bar 39 is within the non-hatched region, a driver can recognize that his/her brake operation is a low fuel consumption and safer driving operation. Because the driving operation is determined as a fuel-efficient brake operation, the background color 33 of the first display unit 13 is the first color as with the state (A). By visually recognizing that the background color 33 is the first color, a driver can recognize that his/her brake operation is a low fuel consumption and safer driving operation.

State (C) indicates a state where the vehicle is moderately accelerated. For example, this state is implemented when the amount of depressing the accelerator pedal is greater than that of the state (A). In the figure, the vehicle speed of 60 kilometers per hour is displayed, which is an example. The bar 39 extends rightward because the accelerator operation is performed. Although the state of fuel efficiency is deteriorated (that is, the fuel consumption is increased) as compared to the state (A), the accelerator operation is determined as a fuel-efficient driving operation and is not determined as reaching a fuel-inefficient driving operation. Therefore, the bar 39 extends to be within the accelerator first region Ar1 that is the non-hatched region. However, the bar 39 becomes longer than that of the state (A). By visually recognizing that the bar 39 is within the non-hatched region, a driver can recognize that his/her accelerator operation is a relatively low fuel consumption. Further, because it is determined that the state of fuel efficiency is deteriorated as compared to the state (A), the background color 33 of the first display unit 13 becomes an intermediate color (in this embodiment, a mixed color of green and blue (blue green)) between the first color and the second color (in this embodiment, blue). By visually recognizing that the background color 33 is the intermediate color, a driver can recognize that his/her accelerator operation is a relatively low fuel consumption.

State (D) indicates a state where the vehicle is moderately decelerated. For example, this state is implemented when the amount of depressing the brake pedal is greater than that of the state (B). The bar 39 extends leftward because the brake operation is performed. Although the state of fuel efficiency is deteriorated (that is, the fuel consumption is increased) as compared to the state (B), the brake operation is determined as a fuel-efficient driving operation, and is not determined as reaching a fuel-inefficient driving operation. Therefore, the bar 39 extends to be within the brake first region Br1 that is the non-hatched region. However, the bar 39 becomes longer than that of the state (B). By visually recognizing that the bar 39 is within the non-hatched region, a driver can recognize that his/her brake operation is a relatively low fuel consumption. Further, because it is determined that the state of fuel efficiency is deteriorated as compared to the state (B), the background color 33 of the first display unit 13 becomes an intermediate color (as described above, a mixed color of green and blue (blue green) in this embodiment,) between the first color and the second color, in a similar way to the state (C). By visually recognizing that the background color 33 is the intermediate color, a driver can recognize that his/her brake operation is a relatively low fuel consumption.

State (E) indicates a state where the vehicle is suddenly accelerated. For example, this state is implemented when the amount of depressing the accelerator pedal is greater than that of the state (C). It is noted that the vehicle speed value of the first display unit 13 in the figure corresponds to an example for the case (F), and does not correspond to the case (E) where a sudden acceleration is performed. The bar 39 extends rightward because the accelerator operation is performed. The state of fuel efficiency is deteriorated (that is, the fuel consumption is increased) as compared to the state (C). The accelerator operation is determined as a fuel-inefficient driving operation. As a result, the bar 39 becomes longer than that of the state (C) to enter the accelerator second region Ar2 that is the hatched region. By visually recognizing that the bar 39 extends into the hatched region, a driver can recognize that his/her accelerator operation deteriorates the fuel efficiency. Further, because the accelerator operation is determined as a fuel-inefficient driving operation, the background color 33 of the first display unit 13 is the second color (in this embodiment, blue). By visually recognizing that the background color 33 is the second color, a driver can recognize that his/her accelerator operation deteriorates the fuel efficiency.

State (F) indicates a state where the vehicle is suddenly decelerated. For example, this state is implemented when the amount of depressing the brake pedal is greater than that of the state (D). The bar 39 extends leftward because the brake operation is performed. The state of fuel efficiency is deteriorated (that is, the fuel consumption is increased) as compared to the state (D), and the brake operation is determined as a fuel-inefficient driving operation. Therefore, the bar 39 becomes longer than that of the state (D) to enter the brake second region Br2 that is the hatched region. By visually recognizing that the bar 39 extends into the hatched region, a driver can recognize that his/her brake operation deteriorates the fuel efficiency. Further, because the brake operation is determined as a fuel-inefficient driving operation, the background color 33 of the first display unit 13 is the second color (in this embodiment, blue). By visually recognizing that the background color 33 is the second color, a driver can recognize that his/her brake operation deteriorates the fuel efficiency.

Thus, the background color 33 of the first display unit 13 and the length of the bar 39 of the coaching display region 37 of the second display unit 15 can encourage a driver to perform the accelerator operation and brake operation such that the background color 33 is not changed into the second color, or such that the bar 39 does not extend into the second region.

Conventionally, only the current fuel efficiency is calculated and displayed. A driver can check the fuel efficiency to some extent by visually recognizing the fuel efficiency display. However, such display only feeds back to the driver the fuel efficiency that is a result of the driving operation. Even if only the fuel efficiency display is provided to the driver, it is difficult for the driver to determine how to perform the driving operation so as to improve the fuel efficiency. In contrast, in the embodiment of the invention, every time a driver performs the accelerator operation or brake operation, the driver can visually recognize whether the background color becomes the second color, or whether the bar extends into the second region, to confirm whether his/her driving operation is a fuel-efficient driving operation. The driver tries to perform the driving operation such that the background color is not changed into the second color, or such that the bar does not enter the second region, which allows the driver to naturally learn the lower-fuel-consumption driving skill for not only the accelerator operation but also the brake operation.

In this embodiment, both the first and second display units 13 and 15 are provided to change both the background color 33 and the length of the bar 39 according to the driving operation. Alternatively, only one of the background color 33 and the length of the bar 39 can cause a driver to learn the driving skill as described above. Accordingly, it is not always necessary to provide both the background color 33 and the length of the bar 39 on the first and second display units 13 and 15.

In this embodiment, the background color 33 and/or the length of the bar 39 are controlled for both the accelerator operation and the brake operation. Alternatively, the background color 33 and/or the length of the bar 39 may be controlled for one of the accelerator operation and the brake operation.

In this embodiment, the background color 33 (see FIG. 2(a)) of the information 31 displayed on the first display unit 13 is changed. The object to be changed is not limited to the background color. Any color displayed on the first display unit 13 may be changed. For example, the color of the information 31 may be changed. In this embodiment, the information 31 indicates the operating state of the vehicle. However, the information 31 is not limited to the vehicle operating state. For example, information (such as ambient temperature) other than the vehicle operating state may be displayed. Further, some indicia (such as graphics, symbol, character, or mark) may be displayed on the first display unit 13, and a color of the indicia may be changed. Instead, a color of a predetermined display region on the first display unit 13 may be changed. For the color of the information 31, the color of an indicia, and the color of a predetermined display region (for example, a region having a predetermined range established at an end (for example, upper end) of a display screen of the first display unit 13), a control can be performed in a similar way to the background color 33, thereby coaching a driver for the driving skill for improving the fuel efficiency.

Further, the color used for the accelerator operation may differ from the color for the brake operation on the first display unit 13. For example, for the accelerator operation, the first color may be set to green while the second color is set to blue. On the other hand, for the brake operation, the first color may be set to yellow while the second color is set to red. In doing so, a driver tries to perform the accelerator operation such that the color of the first display unit 13 does not become blue, and the driver tries to perform the brake operation such that the color of the first display unit 13 does not become red. Thus, the driver can learn the lower-fuel-consumption driving skill for both the accelerator and brake operations.

### [Control Form]

A control technique for implementing the above display form according to an embodiment of the invention will be described.

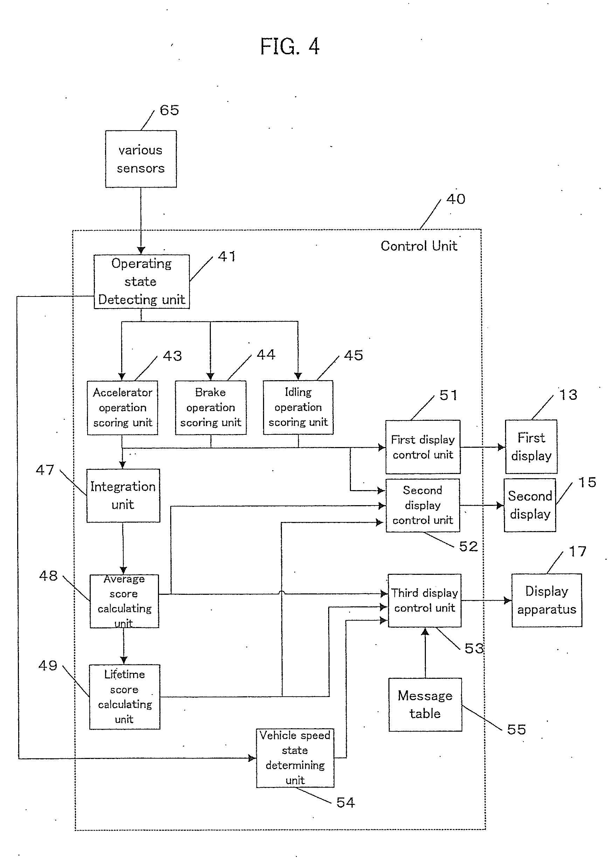

FIG. 4 is a block diagram of a controller, which is mounted on the vehicle, for controlling displays on the first and second display units 13 and 15 according to the driving operation by a driver in an embodiment of the invention. The controller includes a control unit 40. The control unit 40 can be implemented in an Electronic Control Unit (ECU). The ECU is a computer including a Central Processing Unit (CPU) and a memory. Each functional block of the control unit 40 can be implemented by the CPU executing one or more programs in the memory.

An operating state detecting unit 41 detects whether the accelerator operation (as described above, operation for driving the vehicle) is performed and whether the brake operation (as described above, operation for braking the vehicle) is performed. Various sensors 65 are mounted on the vehicle. The operating state detecting unit 41 detects the accelerator operation and the brake operation based on detection values of the sensors 65. The detection may be made by any appropriate technique. For example, a vehicle speed sensor is used. If the vehicle travels at a constant speed or is accelerated, it is determined that the accelerator operation is performed. If the vehicle is decelerated, it is determined that the brake operation is performed. Alternatively, sensors for detecting an operation for depressing the accelerator pedal and the brake pedal may be used. In such a case, the accelerator operation through the accelerator pedal and the brake operation through the brake pedal can be detected.

If it is detected that the accelerator operation is performed, the operating state detecting unit 41 detects a vehicle operating state according to the accelerator operation based on detection values of the sensors 65. In one embodiment, the operating state is an engine rotational speed and an opening degree of a throttle valve. The engine rotational speed can be detected based on a crank angle sensor (a sensor for detecting a rotation angle of a crankshaft) provided in the vehicle. The throttle valve is provided in an intake air passage to the engine. The opening degree of the throttle valve (hereinafter referred to as a throttle opening) can be detected by a throttle opening degree sensor.

If it is detected that the brake operation is performed, the operating state detecting unit 41 detects a vehicle operating state according to the brake operation based on detection values of the sensors 65. In one embodiment, the operating state is a vehicle speed and an acceleration (which is expressed by a negative value because the bake operation causes deceleration). The vehicle speed and the acceleration can be detected by a vehicle speed sensor provided in the vehicle. Alternatively, an acceleration sensor may be provided as one of the various sensors 65 to detect the acceleration of the vehicle.

### Control according to Accelerator Operation

Based on the operating state thus detected in response to the accelerator operation, an accelerator operation scoring unit 43 evaluates the accelerator operation from the viewpoint of fuel efficiency to determine the length of the bar 39 and the background color 33 while determining a score (point) for the accelerator operation. This technique will be described in detail.

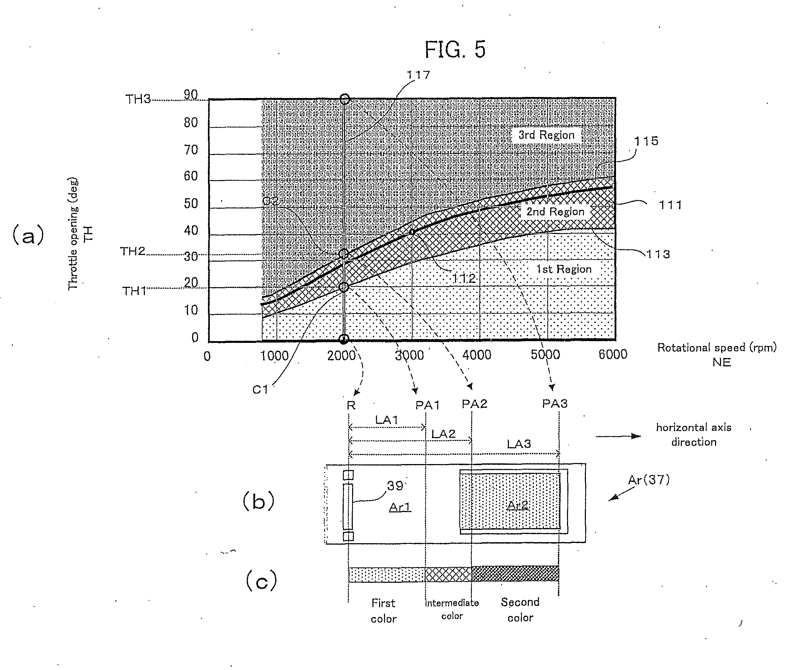

FIG. 5(a) shows an example of a map that is pre-stored in the memory of the control unit 40. A horizontal axis of the map indicates an engine rotational speed (rpm). A vertical axis indicates a throttle opening (deg). A line 111 shown by a bold sold line indicates an operating state for implementing a predetermined optimum value of BSFC (Brake Specific Fuel Consumption, unit is [g/kWh]), that is, a value established as the best fuel efficiency. This line is predetermined for each engine rotational speed and throttle opening based on the engine characteristics of the vehicle. For example, it is seen that, when the engine rotational speed is 3000 rpm, the optimum brake specific fuel consumption can be implemented at the throttle opening of about 40 degrees, as indicated by a point 112.

A region where the engine rotational speed is lower than about 800 rpm is not shown in the figure. This is because the engine is in the idling operation state. A control when the engine is in the idling operation state is described later.

In the figure, the fuel efficiency is deteriorated as the throttle opening is increased under the same engine rotational speed. Thus, in this embodiment, the operating region is divided into three regions in the vertical axis direction to establish three fuel efficiency states consisting of a fuel-efficient state, a fuel-inefficient state, and a state between the fuel-efficient state and the fuel-inefficient state. Specifically, the operating region is divided into one region located near the BSFC line 111 and two regions located below and above the region. These three regions are partitioned by lines 113 and 115. The region located below the line 113 is referred to as a first region. The region located between the lines 113 and 115 is referred to as a second region. The region located above the line 115 is referred to as a third region. The first region is established as a region where the fuel efficiency is good. The third region is established as a region where the fuel efficiency is not good. The second region is established as a region where the fuel efficiency is relatively good and does not reach an efficient state.

The third region corresponds to an operating region where an accelerator operation that leads to a sudden acceleration or an excessively high vehicle speed is performed. The second region corresponds to an operating region where an accelerator operation that leads to a moderate acceleration is performed. The first region corresponds to an operating region where an accelerator operation for cruise travel is performed. Accordingly, the first and second regions correspond to a safer operating region.

Thus, the map where the three regions are previously set is pre-stored in the memory. Based on the engine rotational speed (expressed by NE) and the throttle opening (expressed by TH) that are detected in response to the accelerator operation, the accelerator operation scoring unit 43 refers to the map thus stored to determine the length of the bar 39 and the background color 33. In order to describe this technique, it is assumed that the detected engine rotational speed NE is 2000 rpm. A line 117 indicating the engine rotational speed of 2000 rpm is shown in the vertical axis direction. It is assumed that TH1 is a throttle opening corresponding to an intersection C1 of the lines 117 and 113. TH2 is a throttle opening corresponding to an intersection C2 of the lines 117 and 115. TH3 is a maximum value (in the example of the figure, 90 degrees) of the throttle opening.

On the other hand, FIG. 5(b) shows the accelerator region Ar of the coaching region 37 that is described with reference to FIG. 2(b). Each position in the horizontal axis direction of the accelerator region Ar is expressed with respect to the reference position R. As described above, the accelerator first region Ar1 that is the non-hatched region represents a fuel-efficient accelerator operation state, and the accelerator second region Ar2 that is the hatched region represents a fuel-inefficient accelerator operation state. A predetermined first position PA1 is set in the accelerator first region Ar1. A predetermined second position PA2 is set, in the second region Ar2, near a boundary between the accelerator first and second regions Ar1 and Ar2. A third position PA3 is set at the right end of the accelerator second region Ar2. These positions are previously established as fixed positions. LA1, LA2, and LA3 indicate distances from the reference position R to the first through third positions PA1 to PA3, respectively.

Allocation between the first through third regions in the map of FIG. 5 (a) and the accelerator region Ar will be described. A range from the reference position R to the first position PA1 is brought into correspondence with the first region of the map. A range of the first position PA1 to the second position PA2 is brought into correspondence with the second region of the map. A range of the second position PA2 to the third position PA3 is brought into correspondence with the third region of the map. Accordingly, when the engine rotational speed NE is 2000 rpm, a throttle opening range from zero to TH1 is allocated to the range from the position R to the position PA1. A throttle opening range from TH1 to TH2 is allocated to the range from the position PA1 to the position PA2. A throttle opening range from TH2 to TH3 is allocated to the range from the position PA2 to the position PA3.

The accelerator operation scoring unit 43 determines which region in the map the vehicle operating state expressed by the detected engine rotational speed NE and throttle opening TH exists in. If the vehicle operating state exists in the first region, the length of the bar 39 is calculated by LA1 x TH / (TH1-0). If the vehicle operating state exists in the second region, the length of the bar 39 is calculated by LA1 + (LA2-LA1) x (TH-TH1) / (TH2-TH1). If the vehicle operating state exists in the third region, the length of the bar 39 is calculated by LA2 + (LA3-LA2) × (TH-TH2) / (TH3-TH2).

The second display control unit 52 of FIG. 4 displays the bar 39 having the length thus calculated on the accelerator region Ar of the coaching region 37. Thus, by determining where the vehicle operating state corresponding to the accelerator operation is located in the map, it is evaluated whether the accelerator operation is a fuel-efficient driving operation state. The bar 39 is changed so as to have the length expressing the evaluation result.

If the vehicle operating state corresponding to the accelerator operation is within the first region, a driver visually recognizes that the bar 39 remains in the non-hatched region. Therefore, the driver can recognize that his/her accelerator operation is a fuel-efficient driving operation. On the other hand, if the vehicle operating state corresponding to the accelerator operation is within the third region, a driver visually recognizes that the bar 39 extends into the hatched region. Therefore, the driver can recognize that his/her accelerator operation is a driving operation that deteriorates the fuel efficiency. If the vehicle operating state corresponding to the accelerator operation is within the second region, a driver visually recognizes that the bar 39 extends to near the boundary between the non-hatched region and the hatched region. Therefore, the driver can recognize that he/she should more carefully perform the accelerator operation such that the accelerator operation does not lead to the operating state that deteriorates the fuel efficiency.

Further, the accelerator operation scoring unit 43 determines which of the first to third regions of the map of FIG. 5(a) the vehicle operating state expressed by the detected engine rotational speed NE and throttle opening TH exists in. If the vehicle operating state is within the first region, the first color is selected as the background color 33 of the first display unit 13. If the vehicle operating state is within the third region, the second color is selected as the background color 33. If the vehicle operating state is within the second region, an intermediate color between the first color and the second color is selected as the background color 33. This is shown in FIG. 5(c). In the case where the detected engine rotational speed NE is 2000 rpm, the first color is selected if the detected throttle opening TH is between zero and TH1, the intermediate color is selected if TH is between TH1 and TH2, and the second color is selected if TH is between TH2 and TH3.

The first display control unit 51 of FIG. 4 controls the light source of the first display unit 13 such that the selected color is displayed as the background color 33. Thus, the accelerator operation is evaluated from the viewpoint of fuel efficiency based on the vehicle operating state corresponding to the accelerator operation, and the background color 33 is changed into a color representing the evaluation result.

If the vehicle operating state corresponding to the accelerator operation is within the first region, a driver visually recognizes that the background color 33 is the first color. Therefore, the driver can recognize that his/her accelerator operation is a fuel-efficient driving operation. On the other hand, if the vehicle operating state corresponding to the accelerator operation is within the third region, the background color 33 becomes the second color. By visually recognizing that the background color 33 becomes the second color, a driver can recognize that his/her accelerator operation is a driving operation that deteriorates the fuel efficiency. If the vehicle operating state corresponding to the accelerator operation is within the second region, the background color 33 becomes an intermediate color between the first and second colors. By visually recognizing the intermediate color, a driver can recognize that he/she should more carefully perform the accelerator operation such that the background color 33 does not become the second color.

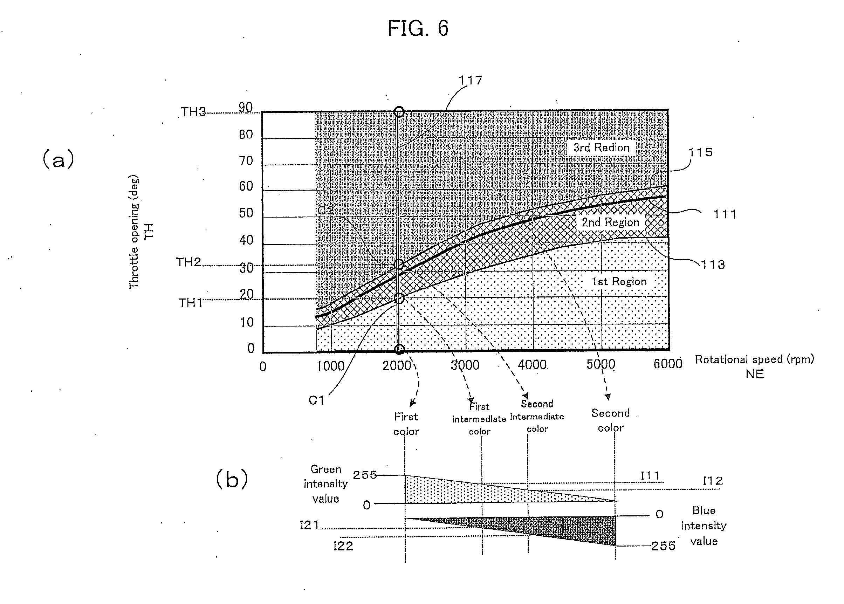

As described above, one intermediate color is provided between the first and second colors in this embodiment. Alternatively, a plurality of intermediate colors having different intensity values may be provided. For example, FIG. 6 shows similar figures to FIG. 5. FIG. 6(a) is identical to FIG. 5(a). Referring to FIG. 6(b), an upper triangle indicates that an intensity value of green in three primary colors (RGB) ranges from zero to 255, and a lower triangle indicates that an intensity value of blue in the three primary colors ranges from zero to 255. For the first color, the green intensity value is 255 while the blue intensity value is zero (that is, green). For the second color, the blue intensity value is 255 while the green intensity value is zero (that is, blue). In this case, 256 colors can be generated between the first and second colors.

A range from the first color to a predetermined first intermediate color is brought into correspondence with the first region of the map. A range from the first intermediate color to a predetermined second intermediate color is brought into correspondence with the second region of the map. A range from the second intermediate color to the second color is brought into correspondence with the third region of the map. Thus, the background color to be displayed can be determined in a similar way to the technique for calculating the length of the bar. Here, the first intermediate color and the second intermediate color are predetermined. The green intensity value and the blue intensity value of the first intermediate color are expressed by I11 and I21, respectively. The green intensity value and the blue intensity value of the second intermediate color are expressed by I12 and I22, respectively.

For example, it is assumed that the detected engine rotational speed NE is 2000 rpm. If the detected throttle opening TH is within the first region, the green intensity value is calculated by 255 - ((255 - I11) x TH / TH1) and the blue intensity value is calculated by I21 x TH / TH1. If the throttle opening TH is within the second region, the green intensity value is calculated by I11 - ((I11- Il2) × (TH-TH1) / (TH2-TH1)) and the blue intensity value is calculated by I21 + ((I22-I21) × (TH-TH1) / (TH2-TH1)). If the throttle opening TH is within the third region, the green intensity value is calculated by I12- (I12 × (TH-TH2) / (TH3-TH2)) and the blue intensity value is calculated by I22 + ((255-I22) × (TH-TH2) / (TH3-TH2)).

According to the intensity values determined for blue and green, the first display control unit 51 controls the blue light source and green light source to display the background color 33.

The intensity value of the above embodiment is one example. Another number of levels of the gradation may be used instead of 256 levels. Green and blue are one example. Any other colors may be used. In this embodiment, the intermediate color is generated by controlling the green light source and the blue light source. However, any technique for mixing colors may be used. For example, the intermediate color may be generated using a filter. As described above, in a case where the color of the information 31 is changed instead of the background color 33, the first display control unit 51 may control elements constituting the color, such as values of pixels constituting the information, so as to display the information with the color intensity value determined in the above-described technique. The colors of an indicia and predetermined display region may be also changed in a similar way.

In the map of FIG. 5(a), the engine rotational speed and the throttle opening are used as the vehicle operating state for evaluating the accelerator operation from the viewpoint of fuel efficiency. However, the vehicle operating state is not limited to the engine rotational speed and the throttle opening. Because the map is used to check whether a fuel-efficient operating state is implemented by the accelerator operation, any appropriate operating state parameter that is usable as an index of the fuel efficiency may be used. For example, the map may be created using a gravity acceleration (acceleration G), a stroke amount of the accelerator pedal, fuel consumption, and a magnitude of a negative pressure of the engine.

In the map of FIG. 5(a), the second region is provided between the first region representing a fuel-efficient state and the third region representing a fuel-inefficient state, which allows the level of the driver's driving skill to be raised (which is described later). Alternatively, only a region representing a fuel-efficient state and a region representing a fuel-inefficient state may be set in the map without establishing the second region.

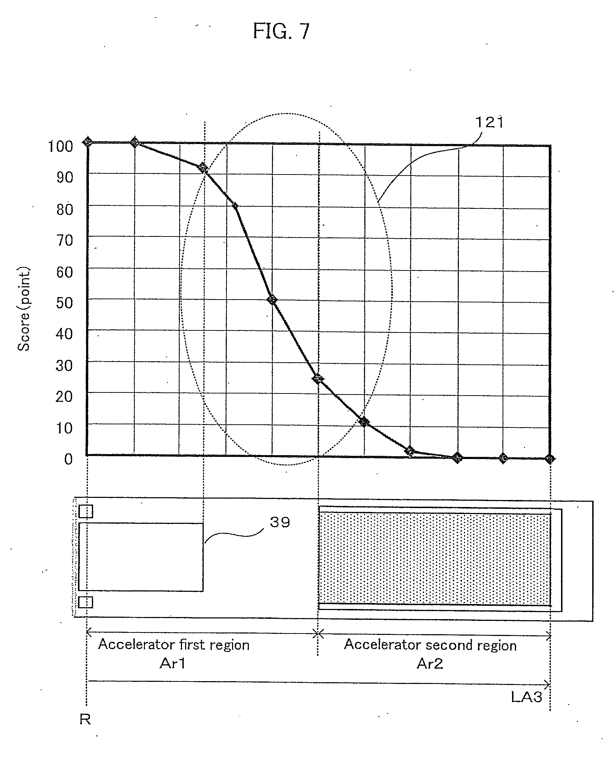

Further, the accelerator operation scoring unit 43 refers to a map as shown in FIG. 7 based on the calculated length of the bar 39 to determine a score (point) for the current accelerator operation. The map may be pre-stored in the memory of the control unit 40. In this example, the score ranges from zero to 100 (points). 100 corresponds to the reference position R, and zero corresponds to a position at a distance of the length of LA3 from the reference position R (that is, the right end of the accelerator region Ar or the third position PA3 of FIG. 5(b)). In the example of the figure, the score corresponding to the length of the bar 39 is 90 points. As shown in the figure, a higher score is obtained as the length of the bar 39 is shorter, that is, as a more fuel-efficient accelerator operation is performed.

In this embodiment, the score is expressed by an integer. Accordingly, when the score corresponding to the length of the bar 39 is a decimal, the score is round off to the nearest integer.

In this embodiment, as shown by a region 121, the score value is largely changed in a score range corresponding to a portion of the accelerator first region Ar1 near the accelerator second region Ar2. The reason is to encourage a driver to perform the accelerator operation within the first and second regions without entering the third region of the map, as described with reference to the map of FIG. 5(a). Alternatively, the score may be allocated so as to linearly change with the length of the bar 39.

In an embodiment where the display of FIG. 2(a) is performed while the coaching region 37 of FIG. 2(b) is not displayed, the length of the bar 39 calculated from the map of FIG. 5(a) may be used as a value for determining the score. In a case where the gradation control is performed as described referring to the map of FIG. 6, the horizontal axis of FIG. 7 is set as corresponding to a range of the intermediate colors between the first and second colors as shown in FIG. 6, which allows the score corresponding to each intermediate color to be determined.

Thus, the accelerator operation scoring unit 43 determines a score as a result of evaluating the accelerator operation from the viewpoint of fuel efficiency every time the accelerator operation is performed. Hereinafter, the score is referred to as an accelerator score.

### Control according to Brake Operation

A brake operation scoring unit 44 of FIG. 4 will be described. Based on the vehicle operating state detected in response to the brake operation, the brake operation scoring unit 44 evaluates the brake operation from the viewpoint of fuel efficiency to determine the length of the bar 39 and the background color 33 while determining a score (point) for the brake operation. This technique will be described in detail.

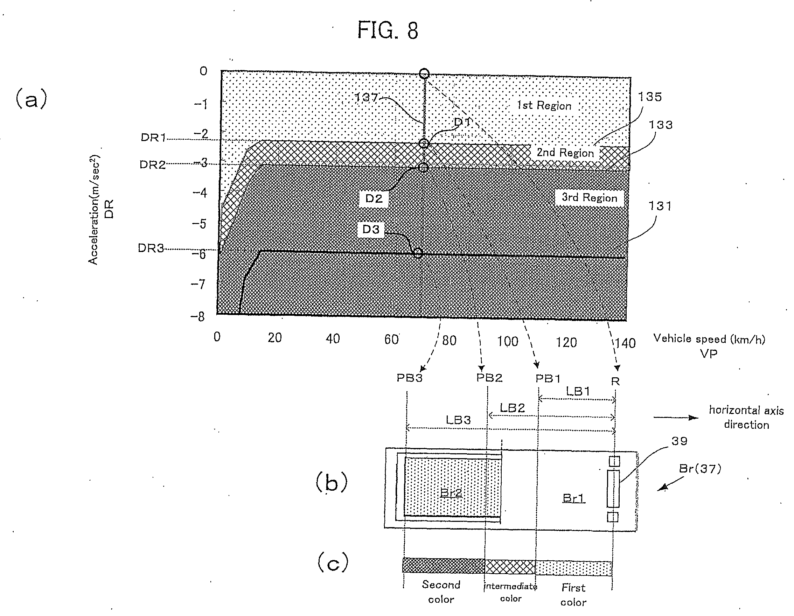

FIG. 8(a) shows an example of a map that is pre-stored in the memory of the control unit 40. A horizontal axis of the map indicates a vehicle speed (km/h). A vertical axis indicates an acceleration (m/sec²), which has a negative value because the brake operation causes deceleration of the vehicle. A line 131 shown by a bold sold line indicates a value representing an acceleration when a predetermined sudden brake operation is performed during normal traveling (the normal travel in this example indicates a travel at a speed greater than about 15km/h). The value of line 131 is predetermined by a simulation or the like. In this embodiment, the value of line 131 is set to -6m/sec² by way of example, but is not limited to this value.

In the figure, the fuel efficiency is deteriorated as an absolute value of the acceleration is increased under the same vehicle speed. In this embodiment, as with the accelerator operation, the operating region is divided into three regions in the vertical axis direction to establish three fuel efficiency states consisting of a fuel-efficient state, a fuel-inefficient state, and a state between the fuel-efficient state and the fuel-inefficient state. Specifically, the third region including the line 131 is established as a region where the fuel efficiency is not good. The third region is located below a line 133, and corresponds to the operating region where a brake operation leading to a sudden deceleration is performed. The first region is established as a region where the fuel efficiency is good. The first region is located above a line 135, and corresponds to the operating region where a brake operation that is strong sufficient to stop the vehicle when there is a sufficient inter-vehicle distance is performed. The second region is established as a region where the fuel efficiency is relatively good and does not reach an insufficient state. The second region is located between the lines 133 and 135. More preferably, the first and second regions are established to be an operating region where a skid can be more securely avoided by the brake operation on a low-µ road (road having a low static friction coefficient µ). Thus, the first and second regions are the operating region where a sudden deceleration is not performed, and hence the first and second regions can be considered as a safer operating region. The lines 133 and 135 partitioning the first to third regions are predetermined through a simulation or the like.

In a case of a hybrid vehicle where the vehicle travels by a combination of an engine and an electric motor, a regenerative brake is used. In such a case, the map is preferably created such that the brake operation where the amount of regeneration by the regenerative brake does not reach a predetermined upper limit is within the first and second regions. This encourages a driver to drive the vehicle with higher energy efficiency

Thus, the map where the three regions are previously set is pre-stored in the memory. Based on the vehicle speed (expressed by VP) and acceleration (expressed by DR) that are detected in response to the brake operation, the brake operation scoring unit 44 refers to the map thus stored to determine the length of the bar 39 and the background color 33. In order to describe this technique, it is assumed that the detected vehicle speed VP is 70 km/h. A line 137 indicating the vehicle speed of 70 km/h is shown in the vertical axis direction. It is assumed that DR3 is an acceleration corresponding to an intersection D3 of the lines 137 and 131, DR2 is an acceleration corresponding to an intersection D2 of the lines 137 and 133, and DR1 is an acceleration corresponding to an intersection D1 of the lines 137 and 135.

On the other hand, FIG. 8(b) shows the brake region Br of the coaching region 37 that is described with reference to FIG. 2(b). Each position in the horizontal direction of the brake region Br is expressed with respect to the reference position R. As described above, the brake first region Br1 that is the non-hatched region represents a fuel-efficient brake operation state. The brake second region Br2 that is the hatched region represents a fuel-inefficient brake operation state. A predetermined first position PB1 is set in the brake first region Br1. A predetermined second position PB2 is set, in the brake second region Br2, near a boundary between the brake first region Br1 and the brake second region Br2. A third position PB3 is set at the left end of the brake second region Br2. These positions are previously established as fixed positions. LB1, LB2, and LB3 indicate distances from the reference position R to the first through third positions PB1 to PB3, respectively.

Allocation between the first through third regions located above the line 131 in the map of FIG. 8(a) and the brake region Br will be described. A range from the reference position R to the first position PB1 is brought into correspondence with the first region of the map. A range from the first position PB1 to the second position PB2 is brought into correspondence with the second region of the map. A range from the second position PB2 to the third position PB3 is brought into correspondence with the third region of the map. Accordingly, when the detected vehicle speed VP is 70 km/h, an acceleration range from zero to DR1 is allocated to the range from the position R to the position PB1. An acceleration range from DR1 to DR2 is allocated to the range from the position PB1 to the position PB2. An acceleration range from DR2 to DR3 is allocated to the range from the position PB2 to the position PB3.

The brake operation scoring unit 44 determines which region of the map the vehicle operating state expressed by the detected vehicle speed VP and acceleration DR exists in. If the vehicle operating state exists in the first region, the length of the bar 39 is calculated by LB1 × |DR| / |DR1|. Hers, | | indicates an absolute value. If the acceleration DR exists in the second region, the length of the bar 39 is calculated by LB1 + (LB2-LB1) × (|DR |-| DR1| / (| DR2|-| DR1|). If the acceleration DR exists in the third region, the length of the bar 39 is calculated by LB2 + (LB3-LB2) × (|DR| - |DR2|) / (|DR3| - |DR2|).

In this embodiment, as described in the above allocation, because the intersection D3 of the lines 131 and 137 is set to the left end (position PB3) of the brake region Br, the bar 39 is stuck at the left end of the brake region Br when the brake operation that leads to a deceleration whose magnitude is larger than the acceleration DR3 corresponding to D3 is performed. Thus, a driver can be encouraged to suppress the brake operation that leads to a deceleration whose magnitude is larger than the acceleration DR3.

The second display control unit 52 of FIG. 4 displays the bar 39 having the length thus calculated on the brake region Br of the coaching region 37. Thus, by determining where the vehicle operating state corresponding to the brake operation is located in the map, it is evaluated whether the brake operation is a fuel-efficient driving operation state. The bar 39 is changed so as to have the length expressing the evaluation result.

If the vehicle operating state corresponding to the brake operation is within the first region, a driver visually recognizes that the bar 39 remains in the non-hatched region. Therefore, the driver can recognize that his/her brake operation is a fuel-efficient driving operation. On the other hand, if the vehicle operating state corresponding to the brake operation is within the third region, a driver visually recognizes that the bar 39 extends into the hatched region. Therefore, the driver can recognize that his/her brake operation is a driving operation that deteriorates the fuel efficiency. If the vehicle operating state corresponding to the brake operation is within the second region, a driver visually recognizes that the bar 39 extends to near the boundary of the non-hatched region and the hatched region. Therefore, the driver can recognize that he/she should more carefully perform the brake operation such that the brake operation does not lead to an operating state that deteriorates the fuel efficiency.

Further, the brake operation scoring unit 44 determines which of the first to third regions of the map of FIG. 8(a) the vehicle operating state expressed by the detected vehicle speed VP and acceleration DR exists in. If the vehicle operating state is within the first region, the first color is selected as the background color 33 of the first display unit 13. If the vehicle operating state is within the third region, the second color is selected as the background color 33. If the vehicle operating state is within the second region, an intermediate color between the first and second colors is selected as the background color 33. This is shown in FIG. 8(c). In the case where the detected vehicle speed VP is 70 km/h, the first color is selected if the magnitude of the detected acceleration DR is between zero and DR1, the intermediate color is selected if the magnitude of DR is between DR1 and DR2, and the second color is selected if the magnitude of DR is greater than DR2.

The first display control unit 51 of FIG. 4 controls the light source of the first display unit 13 such that the selected color is displayed as the background color 33. Thus, the brake operation is evaluated from the viewpoint of fuel efficiency based on the vehicle operating state corresponding to the brake operation, and the background color 33 is changed into a color indicating the evaluation result.

If the vehicle operating state corresponding to the brake operation is within the first region, a driver visually recognizes that the background color 33 is the first color. Therefore, the driver can recognize that his/her brake operation is a fuel-efficient driving operation. On the other hand, if the vehicle operating state corresponding to the brake operation is within the third region, the background color 33 becomes the second color. By visually recognizing that the background color 33 becomes the second color, a driver can recognize that his/her brake operation is a driving operation that deteriorates the fuel efficiency. If the vehicle operating state corresponding to the brake operation is within the second region, the background color 33 becomes an intermediate color between the first and second colors. By visually recognizing the intermediate color, a driver can recognize that he/she should more carefully perform the brake operation such that the background color 33 does not become the second color.

As described above with reference to FIG. 6 for the accelerator operation, the acceleration range from zero to DR3 may be allocated to an intermediate color range between the first and second colors. The green intensity value and the blue intensity value are calculated in a similar way to FIG. 6, whereby a color to be displayed as the background color 33 may be determined.

In the map of FIG. 8(a), the vehicle speed and the acceleration are used as the vehicle operating state for evaluating the brake operation from the viewpoint of the fuel efficiency. However, the vehicle operating state is not limited to the vehicle speed and the acceleration. Because the map is used to check whether a fuel-efficient operating state is implemented by the brake operation, any appropriate operating state parameter that is usable as an index of the fuel efficiency may be used. For example, the map of FIG. 8(a) may be created using a gravity acceleration (acceleration G), a hydraulic pressure value of the brake, and a stroke amount of a brake pedal. In the case of a hybrid vehicle, the regenerative amount may be used because the electric energy is regenerated by the brake operation.

In the map of FIG. 8(a), as with the map for the accelerator operation, the second region is provided between the first region representing a fuel-efficient state and the third region representing a fuel-inefficient state. Alternatively, only a region representing a fuel-efficient state and a region representing a fuel-inefficient state may be set in the map without establishing the second region.

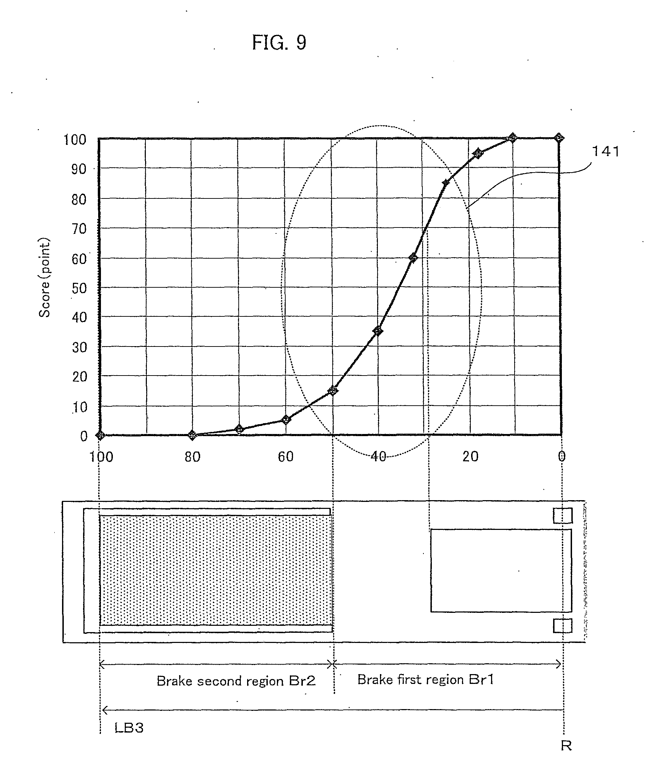

Further, the brake operation scoring unit 44 refers to a map as shown in FIG. 9 to determine a score (point) for the current brake operation based on the calculated length of the bar 39. The map may be pre-stored in the memory of the control unit 40. In this example, the score ranges from zero to 100 (points). 100 corresponds to the reference position R. Zero corresponds to a position at a distance of a length of LB3 from the reference position R (that is, the left end of the brake region Br or the third position PB3 of FIG. 8(b)). In the example of the figure, the score corresponding to the length of the bar 39 is 70 points. As shown in the figure, a higher score is obtained as the length of the bar 39 is shorter, that is, as a more fuel-efficient brake operation performed.

In this embodiment, the score is expressed by an integer. Accordingly, when the score corresponding to the length of the bar 39 is a decimal, the score is round off to the nearest integer.

In this embodiment, as shown by a region 141, the score value is largely changed in a score range corresponding to a portion of the brake first region Br1 near the brake second region Br2. The reason is to encourage a driver to perform the brake operation within the first and second regions without entering the third region, as described with reference to the map of FIG. 8(a). Alternatively, the score may be allocated so as to linearly change with the length of the bar 39.

In an embodiment where the display of FIG. 2(a) is performed while the coaching region 37 of FIG. 2(b) is not displayed, the length of the bar 39 calculated from the map of FIG. 8(a) may be used as a value for determining the score. In a case where the gradation control is performed as described referring to the map of FIG. 6, the horizontal axis of FIG. 9 is set as corresponding to a range of the intermediate colors between the first and second colors as shown in FIG. 6, which allows the score corresponding to each intermediate color to be determined.

Thus, the brake operation scoring unit 44 determines a score as a result of evaluating the brake operation from the viewpoint of fuel efficiency every time the brake operation is performed. Hereinafter, the score is referred to as a brake score.

In this embodiment, the maps of FIGS. 5(a) and 8(a) are allocated to the accelerator region Ar and brake region Br of the coaching region 37 such that the bar 39 is shorter as the fuel efficiency becomes better. Alternatively, the maps may be allocated to the accelerator region Ar and brake region Br such that the bar 39 is longer as the fuel efficiency becomes better. In such a case, the length of the bar 39 is similarly controlled such that the tip of the extended bar 39 (the above-described displayed graphics may be used) moves away from the boundary of the accelerator first region (representing a fuel-efficient driving operation state) and the accelerator second region (representing a fuel-inefficient driving operation state) toward the accelerator first region side, as the accelerator operation is determined as being more fuel-efficient. The same may apply for the brake operation.

### Control according to Idling Operation

Referring back to FIG. 4, the operating state detecting unit 41 preferably detects an idling operation state of the vehicle. When the idling operation is initially started in one driving cycle, an idling operation scoring unit 45 sets an initial value in an idling score. Every time the idling operation is detected, the idling operation scoring unit 45 starts a timer (not shown) to measure an elapsed time of the idling operation. After a predetermined time has elapsed since the start of the idling operation, the idling operation scoring unit 45 subtracts from the idling score by a predetermined value at predetermined time intervals.

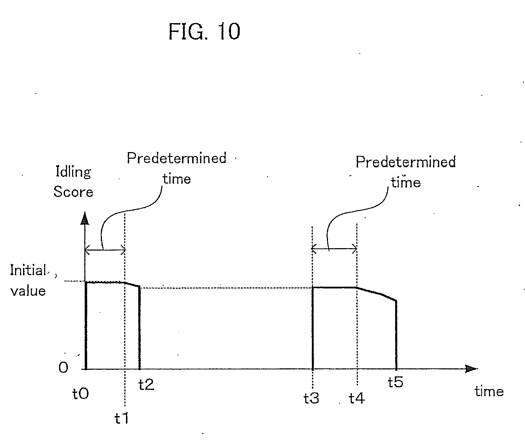

Here, a technique for subtracting from the idling score will be described with reference to FIG. 10. At time t0, a driving cycle is started, and the idling operation is started. The initial value (in the embodiment, 100 points) is set in the idling score. From time t1 at which a predetermined time (for example, one minute) has elapsed since the idling operation was started to time t2 at which the idling operation is stopped, the idling score is decremented by a predetermined value at predetermined time intervals. Here, the predetermined time is preferably set in such a manner as to correspond to an idling duration necessary for the vehicle to temporarily stop or wait at a traffic light, and may be set based on a simulation or an empirical value. Thus, it is prevented that the idling score is decremented for the idling operation having a usual duration for a temporal stop and a wait at a traffic light. Because the idling operation having a duration longer than the predetermined time can be considered as, for example, parking for doing something (for example, stopping at a shop), the idling score becomes smaller as the duration of the idling operation is longer.

The idling score at time t2 at which the idling operation is stopped is stored and kept, for example, in the memory of the control unit 40. When the idling operation is re-started at time t3, the idling score stored in the memory (that is, the idling score at time t2) is read at time t4 after the predetermined time has elapsed since the idling operation was re-started, and the idling score is decremented by the predetermined value at predetermined time intervals until the idling is stopped at time t5. Thus, the idling score is decreased with the duration of the idling operation in one driving cycle.

There is a vehicle (such as a hybrid vehicle) that is capable of performing the "idle-stop" as one mode of the idling operation. As is well known, the idle-stop is an operating state where the engine is stopped when the vehicle is temporarily stopped. Auxiliary equipment on the vehicle is driven by the motor. Preferably, an elapsed time during which the vehicle is in the idle-stop state is not included in the above predetermined time because fuel is not consumed in the idle-stop state. The idle-stop state can be detected by the operating state detecting unit 41 (FIG. 4).

In this embodiment, when the idling operation other than the idle-stop state is being performed (that is, fuel is consumed), the second display control unit 52 positions the bar 39 at the reference position R in the coaching region 37 of FIG. 2(b) without extending the bar 39. The first display control unit 51 displays the second color as the background color 33 of the first display unit 13 of FIG. 2(a) during the idling operation.

On the other hand, when the idle-stop is being performed, it is preferable that the first display control unit 51 displays the first color as the background color 33 of the first display unit 13. The second display control unit 52 may position the bar 39 at the reference position R without extending the bar 39.

Thus, if a transition is made from the idling operation that is the idle-stop to the idling operation that is not the idle-stop, the first display control unit 51 changes the background color 33 from the first color to the second color. A driver can recognize whether the idling operation that consumes fuel is being performed by visually recognizing the background color 33.

In this embodiment, the idling score is calculated based on the duration of the idling operation. Alternatively, the idling score may be calculated based on another operating state parameter. For example, the idling score may be calculated based on the fuel consumption (which can be calculated based on a fuel injection amount) during the idling operation. The idling score may be decreased from the initial value as the fuel consumption amount increases.

The term "driving operation" in the description may be also used for an operation for causing the vehicle to stop such that the engine is in the idling operation state.

### Integration of Score and Calculation of Average Score

Referring back to FIG. 4, an integration unit 47 integrates, at predetermined time intervals, the accelerator score calculated by the accelerator operation scoring unit 43, the brake score calculated by the brake operation scoring unit 44, and the idling score calculated by the idling operation scoring unit 45. In this embodiment, the integration is performed in each driving cycle that is a cycle from the engine start to the engine stop of the vehicle (that is, from the turn-on of the ignition to the turn-off of the ignition). Specifically, the integrated score value is set to zero at the start of each driving cycle, and then the accelerator score, brake score, and idling score calculated during the driving cycle are integrated until the driving cycle is ended.

An average score calculating unit 48 divides the score thus integrated by the integration unit 47 by an elapsed time from the start of the driving cycle. Thus, an average value of the integrated score value from the start of the driving cycle to the present time is obtained. The average value is referred to as an average score. The average score represents an average of the fuel efficiency state from the start of the driving cycle to the present time. A higher average score indicates that a more fuel-efficient driving operation is performed. In this embodiment, every time the average score is calculated, the calculated average score is sequentially stored in, for example, a ring buffer provided in the memory of the control unit 40.

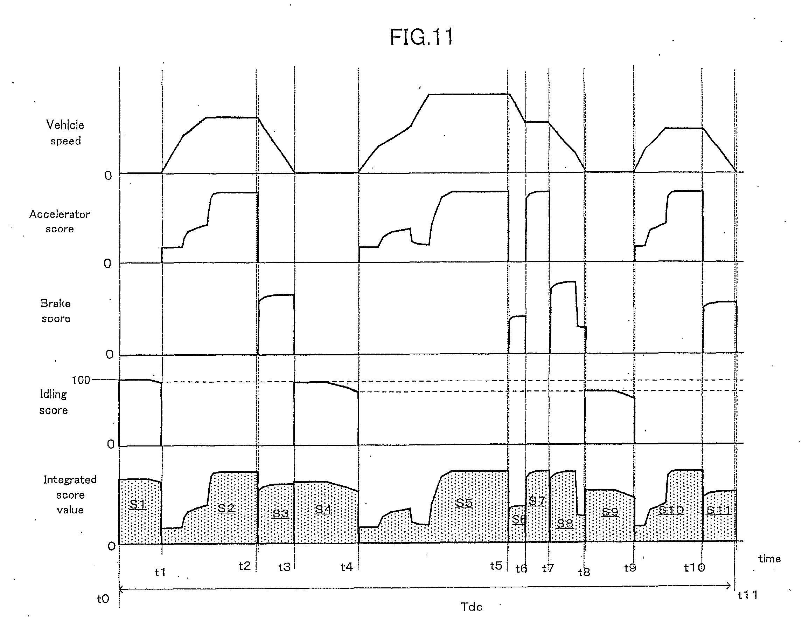

Here, a technique for integrating the score and calculating the average score will be more specifically described with reference to FIG. 11. At time t0, the ignition is turned on to start the driving cycle. An idling operation is started along with the start of the driving cycle. An initial value (for example, 100 points) is set in the idling score. As described above with reference to FIG. 10, after a predetermined time has elapsed since the idling operation was started, the idling score is decremented with time. At time t1, the idling operation is stopped. An accelerator operation is performed by, for example, a driver depressing the accelerator pedal, to increase the vehicle speed. As described above, the accelerator score is calculated at predetermined time intervals while the accelerator operation is being performed. At time t2, the accelerator operation is stopped. A brake operation is started by, for example, the driver depressing the brake pedal. As described above, the brake score is calculated at predetermined time intervals while the brake operation is being performed. At time t3, the brake operation is stopped. The vehicle speed is zero to stop the vehicle. Idling operation is started again. After the predetermined time has elapsed, the decrement from the previous idling score is started. The decrement process is repeated with time. At time t4, an accelerator operation is started again.

The integrated score value is zero at time t0 at which the driving cycle is started. One of the accelerator score, brake score, and idling score is calculated at each time point from t0 to t11 at which the driving cycle is ended. Every time any score is calculated, the score is added to the previous integrated score value to calculate the current integrated score value. The "integrated score value" in the figure shows a conceptual image of this integration process. The idling score is integrated between times t0 and t1, which is expressed by an area S1. The accelerator score is integrated between times t1 and t2, which is expressed by an area S2. At time t2, the integrated score value is S1+S2. The brake score is integrated between times t2 and t3, which is expressed by an area S3. At time t3, the integrated score value is S1+S2+S3.

Every time the integration process is performed, the integrated score value is divided by an elapsed time from time t0 at which the driving cycle is started to the present time (the elapsed time can be measured with a timer and expressed by seconds) to calculate the average score. For example, at time t2, the average score is calculated by (S1 + S2) / (t2 - t0).

The average score at the end of one driving cycle is calculated by dividing the integrated score value calculated in the driving cycle by a time length Tdc of the driving cycle (as described above, the time length can be measured with a timer and expressed by seconds). In the example of the figure, the average score at the end of the driving cycle is calculated by (S1+S2+ ... +S11) / Tdc. Accordingly, at the end of the driving cycle, a score per unit time (for example, one second) for the driving cycle is calculated, which is referred to as a total score. The total score represents an average of the fuel efficiency state over the driving cycle. The total score is stored in the memory of the control unit 40.

Every time the average score is calculated, the second display control unit 52 of FIG. 4 converts the average score into the number of leaves and displays the leaves in the score display region 35 of FIG. 2(b). In this embodiment, the average score has an upper limit of 100 points as shown in the maps of FIGS. 7 and 9. In a case where ten leaves can be displayed, one leaf corresponds to 10 points. The average score of FIG. 2(b) indicates 50 points. When the average score that is not divisible by 10 is calculated, the average score is rounded off to the nearest ten. For example, the average score of 55 points as shown in FIGS. 7 and 9 is round off to 60 points and then converted into the number of leaves. Alternatively, only rounding-up or only rounding-down may be performed. By visually recognizing the number of leaves displayed in the score display region 35 of the second display unit 15, a driver can recognize the state of fuel efficiency obtained by his/her driving operation in the current driving cycle whenever needed.

In this embodiment, the score value is expressed by the number of leaves in the score display region 35. Such graphics display makes it easy for a driver to recognize the score value. As shown in FIG. 2(b), five "stems" are displayed in the score display region 35. A driver easily and visually recognizes that 10 leaves indicate the perfect score. Because the current number of leaves is five, the driver can easily visually recognize that the current score value is a half of the perfect score. Thus, it is preferable that not only the current score value but also the perfect score are displayed so as to be easily and visually recognized.

Alternatively, a display form for the score may be arbitrarily set. For example, the score may be displayed by graphics other than the leaf (a simple rectangle or circle may be used). Or, the score value may be displayed by a numerical value (for example, the number "50" may be displayed). In such a case, the perfect score value may be displayed together with the current score value.

In addition to the display of the average score of FIG. 2(b), other information such as a travel distance from the start of the current driving cycle to the present time may be displayed on the second display unit 15.

In this embodiment, the scores is calculated for each of the accelerator operation, the brake operation, and the driving operation leading to the idling operation. Alternatively, the score calculation may be performed for only one or two of these three types of driving operation, although the bar 39 and/or the background color 33 are displayed for all types of driving operation. In this embodiment, the score for all the accelerator operation, the brake operation, and the driving operation leading to the idling operation is integrated to calculate the average score. Alternatively, the score integration may be performed for only one or two of these three types of driving operation to calculate the average value (temporal average). For example, the accelerator average score for the accelerator operation, the brake average score for the brake operation and the idling average score for the idling operation may be calculated, which will be described later.

### Calculation of Lifetime Score

As described above, the total score represents the average of the fuel efficiency state for each driving cycle. The total score indicates whether a fuel-efficient driving operation is performed in the driving cycle. A lifetime score is an integrated value of the total score (that is, a score obtained by accumulating the total score). The lifetime score indicates the level of the driver's driving skill regarding the fuel efficiency. A technique for calculating the lifetime score will be described.

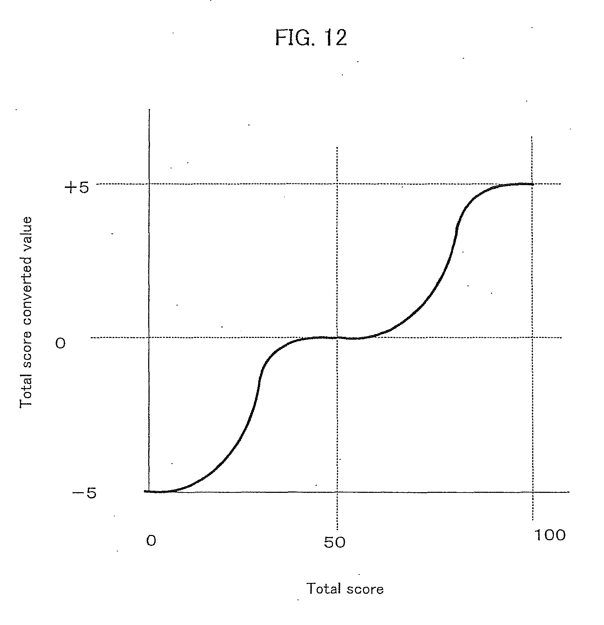

Every time a driving cycle is ended, a lifetime score calculating unit 49 of FIG. 4 converts the total score of the current driving cycle into a total score converted value by referring to a map as shown in FIG. 12. The map may be pre-stored in the memory of the control unit 40. Because the total score equal to or greater than 50 points indicates a fuel-efficient driving operation, the total score equal to or greater than 50 points is converted into the total score converted value having a positive value. Because the total score less than 50 points does not still indicate a fuel-efficient driving operation, the total score less than 50 points is converted into the total score converted value having a negative value.

In this embodiment, the map is configured such that changes in the total score converted value are smaller near the total scores of zero, 50, and 100. In doing so, the total score can be converted into the total score converted value in such a manner as to more correctly reflect the level of the driving skill regarding the fuel efficiency. Alternatively, the total score converted value may linearly change with changes in the total score.

In this embodiment, the absolute value of the maximum value (in this example, +5) is the same as the absolute value of the minimum value (in this example, -5) in the total score converted value. Alternatively, the absolute value of the maximum value may differ from the absolute value of the minimum value. For example, the absolute value of the minimum value may be set larger than the absolute value of the maximum value (for example, -10 and +5). In doing so, a decreasing amount is larger than an increasing amount for the lifetime score (described later), thereby allowing the driving skill of a driver to be more stably improved.

In this embodiment, the total score converted value is expressed by an integer. Accordingly, when the total score converted value corresponding to the total score is a decimal, the total score converted value is rounded off to the nearest integer. Alternatively, in a case where the total score expressed by the number of leaves" as shown in FIG. 2(b) is used, that is, in a case where the total score is expressed in units of 10, the total score converted values (expressed by integer) corresponding to the total scores of 0, 10, 20, ..., 100 may be defined in a table and stored in the memory.

Alternatively, the above conversion may not be performed. In such a case, it is preferable that the total score is established in a range from a negative value to a positive value (for example, a range from -50 points to 50 points). In doing so, the lifetime score (described later) can be increased and decreased according to the driving skill regarding the fuel efficiency. For example, the range from -50 to 50 of the total score may be linearly brought into correspondence with 0 to 10 leaves such that the graphics as described above is displayed.

Preferably, the lifetime score calculating unit 49 corrects the determined total score converted value by multiplying by the travel distance of the current driving cycle. The longer the travel distance, the more the driving experience. Multiplying by the travel distance allows the lifetime score to reflect the driving experience. Accordingly, the total score converted value of the current driving cycle is calculated by "total score converted value determined from the map of FIG. 12" x "travel distance (km) of current driving cycle."

It is preferable that an upper limit is set for the total score converted value calculated for every driving cycle. In this embodiment, 200 points is set as the upper limit of the total score converted value corrected by the travel distance. This is done so as to encourage a driver to develop the driving skill for improving the fuel efficiency while gradually increasing the lifetime score.

The lifetime score calculating unit 49 adds the total score converted value determined in the current driving cycle to the previous value of the lifetime score to calculate the current value of the lifetime score. The initial value of the lifetime score is set to zero. The lifetime score is updated every time the driving cycle is performed. The lifetime score value is increased as the level of the driving skill regarding the fuel efficiency is improved.

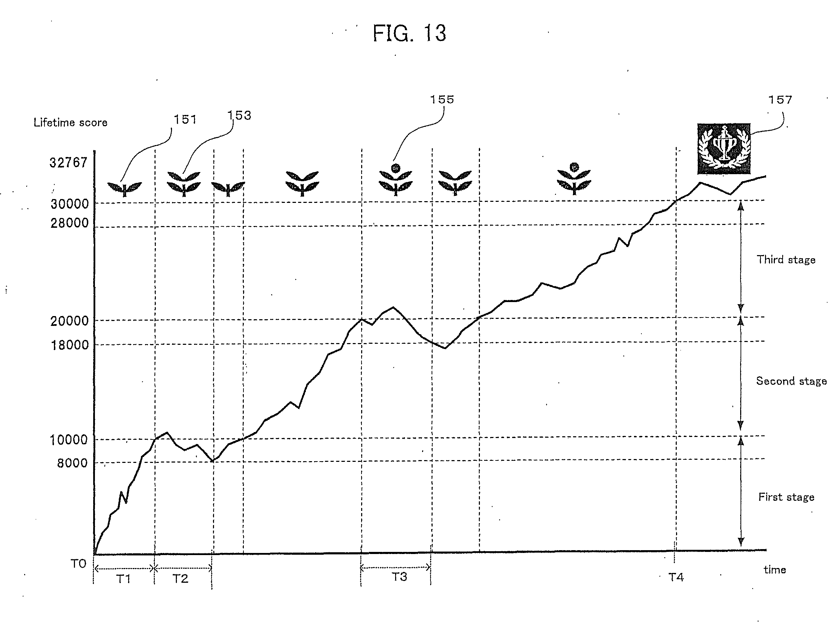

FIG. 13 shows an example of a transition of the lifetime score. The horizontal axis indicates time. The vertical axis indicates the lifetime score value.

In this embodiment, three stages are established according to the lifetime score value. A first stage ranges from zero to 9999 points in the lifetime score value. A second stage ranges from 10000 to 19999 points. A third stage ranges from 20000 to 29999 points. As the driving skill regarding the fuel efficiency is improved, the lifetime score rises from the first stage through the third stage. On the other hand, because the total score converted value may have a negative value as described above, the lifetime score may be reduced from the third stage through the first stage, which indicates that the driving skill regarding the fuel efficiency is deteriorated.

The first stage is a so-called beginner level where a driver learns a basic operation of the accelerator and brake operations in order to improve the fuel efficiency. The second stage is a middle level where a driver learns a driving operation in order to further improve the fuel efficiency. The third stage is an expert level where a driver learns a more perfect driving operation from the viewpoint of fuel efficiency.

At time T0, the lifetime score has the initial value of zero. It can be arbitrarily determined when to initialize the lifetime to zero. For example, the initial value may be set in the lifetime score in response to a predetermined operation performed on the display screen by a driver. Further, the lifetime score may be established for every vehicle or for every driver.

In a time period T1, the lifetime score is in the first stage. As shown by reference numeral 151, one row of leaves is displayed in the score display region 35 of FIG. 2(b). In a time period T2, the lifetime score temporarily enters the second stage. In the second stage, as shown by reference numeral 153, two rows of leaves are displayed in the score display region 35 of FIG. 2(b). In a time period T3, the lifetime score enters the third stage. In the third stage, as shown by reference numeral 155, a flower is displayed together with two rows of leaves in the score display region 35 of FIG. 2(b). Thus, the score value is expressed by the number of leaves displayed in the score display region 35, and the form of the leaves is changed between the stages. Therefore, a driver can recognize which stage he/she exists in. Because the form of the leaves grows as the lifetime score rises between the stages, the driver easily and visually recognizes the improvement of the driving skill.

At time T4, the lifetime score is greater than 30000 points to exceed the third stage. This indicates that the driving skill regarding the fuel efficiency has sufficiently improved. In this embodiment, an emblem as shown by reference numeral 157 is displayed, for example, on the score display region 35. Thus, a driver can learn the driving skill for improving the fuel efficiency with a feeling that the driver enjoys a game. The shape of the graphics 151 to 155 displayed in the score display region 35 is only an example. Graphics having another shape may be used. Alternatively, the stage may be expressed by a character or a numerical value instead of the graphics.

As described above, in this embodiment, the upper limit (200 points) is set for the total score converted value. Accordingly, even if a driver performs a fuel-efficient driving operation, the lifetime score does not rises to the next stage unless the driving cycle is repeated 50 times or more. The upper limit may be set to any value, and a range between the stages may be set to any value. However, the upper limit and a range between the stages are preferably established such that rising to the next stage is gradually implemented while the driver experiences a certain amount of travel distance and driving cycles. In doing so, the driver can be encouraged to drive the vehicle with fuel efficiency in mind for a long time.

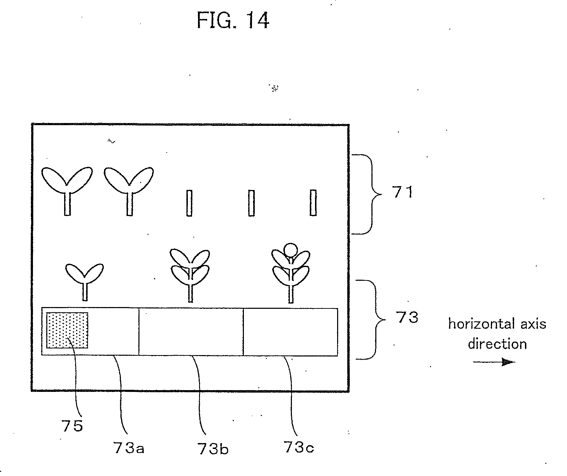

After the ignition is turned off, the second display control unit 52 of FIG. 4 displays the total score and lifetime score that are calculated in the current driving cycle on the second display unit 15. FIG. 14 shows an example of this display, which is presented instead of the display of FIG. 2(b) after the ignition is turned off. A region 71 indicates the total score. The display form of the region 71 is similar to the score display region 35 of FIG. 2(b). The total score is converted into the number of leaves, which is displayed in the region 71. A region 73 indicates the current stage and lifetime score. A region 73a corresponds to the first stage, a region 73b corresponds to the second stage, and a region 73c corresponds to the third stage. One row of leaves is displayed to indicate the first stage, two rows of leaves are displayed to indicate the second stage, and two rows of leaves with a flower are displayed to indicate the third stage.

The length in the horizontal axis direction of each regions 73a to 73c corresponds to a score range of each stage (in this embodiment, each score range is 10000 points). A bar 75 indicates the lifetime score value. For example, when the lifetime score is 5000 points and is in the first stage, the bar 75 extending to the center of the region 73a of the first stage is displayed as shown in the figure. Thus, after turning off the engine, a driver can recognize the evaluation result of the driving operation in the current driving cycle from the viewpoint of fuel efficiency and which level his/her lifetime score, that is, his/her driving skill regarding the fuel efficiency reaches.

Other information such as a travel distance in the current driving cycle may be displayed on the screen as shown in FIG. 14. During the vehicle traveling, the screen as shown in FIG. 14 may be appropriately displayed on the second display unit 15 or the display apparatus 17 (FIG. 1) in response to a predetermined operation (such as a predetermined button operation) performed by a driver. In such a case, the total score, lifetime score, and stage that are calculated at the end of the previous driving cycle may be displayed.

### Stage Control

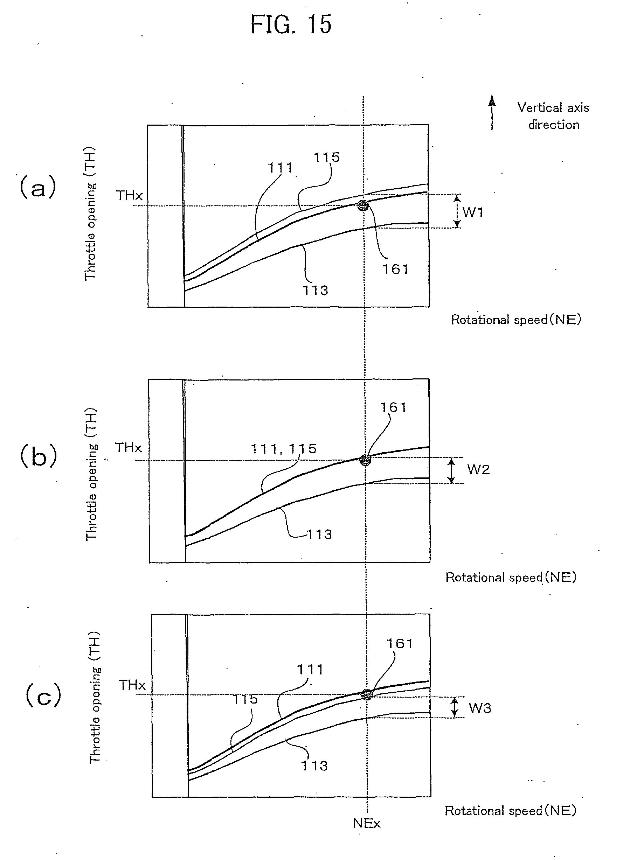

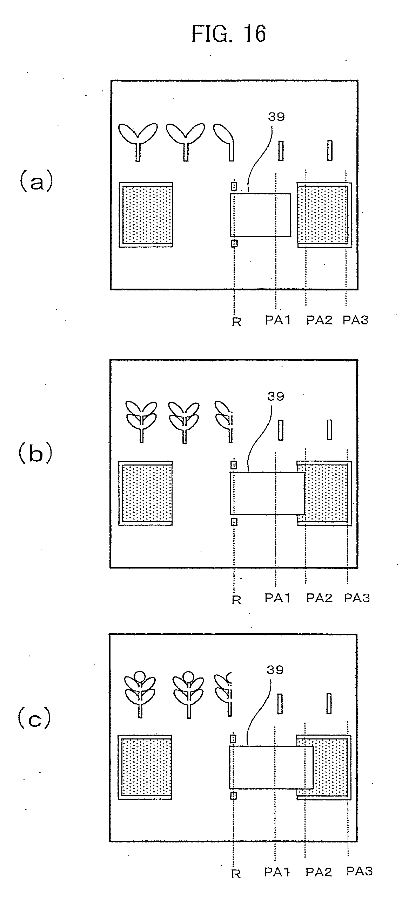

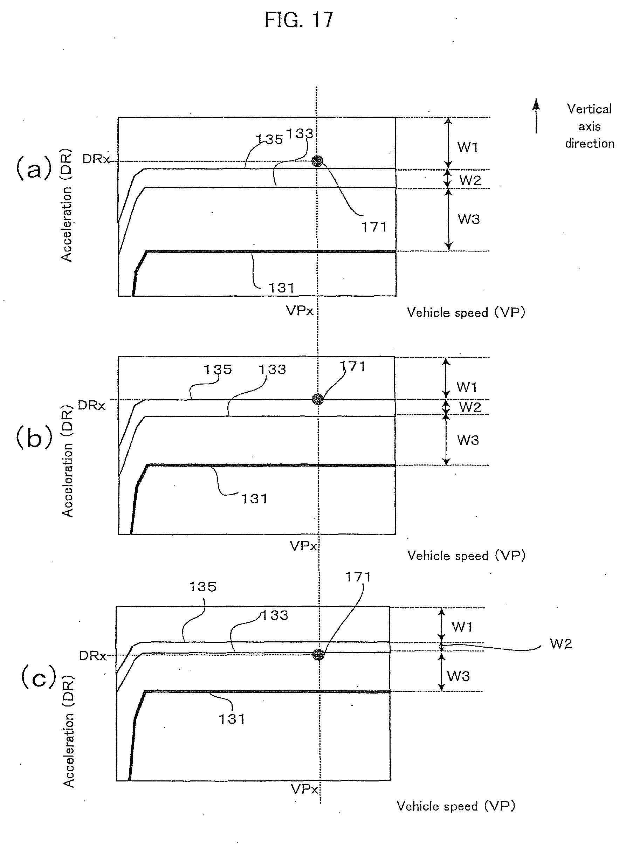

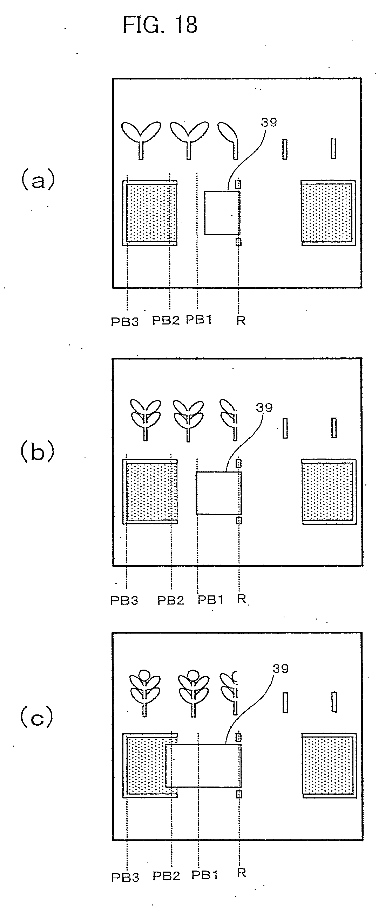

In this embodiment, in order to improve the driving skill regarding the fuel efficiency, the accelerator score and the brake score are more strictly marked (graded) as the lifetime score rises from the first stage through the third stage. This technique for the accelerator operation will be described with reference to FIGS. 15 and 16, and for the brake operation will be described with reference to FIGS. 17 and 18.

FIG. 15 shows maps used for the accelerator operation. FIG. 15(a) shows the same map as FIG. 5(a). The line 111 indicating BSFC and the lines 113 and 115 partitioning the first to third regions are shown. This map is used for the first stage. If the lifetime score is in the first stage, the accelerator operation scoring unit 43 refers to the map for the first stage to determine the length of the bar and the background color as described above.

FIG. 15(b) shows a map for the second stage, and FIG. 15(c) shows a map for the third stage. The size of the first region in the maps for the second and third stages is the same as the size of the first region in the map for the first stage. Although the line 111 indicating BSFC is shown for the purpose of reference, the position of the line 111 is not changed between the stages. However, from the first through third stages, a width in the vertical axis direction of the second region is narrower while a width in the vertical axis direction of the third region is wider. That is, in the map of FIG. 15(b), although the line 113 defining the bottom of the second region is located in the same position as the map for the first stage, the line 115 defining the top of the second region overlaps with the line 111 of BSFC. As a result, as compared to the first stage, the second region is narrower while the third region is wider.

In the map of FIG. 15(c), although the line 113 defining the bottom of the second region is located in the same position as the map for the first stage, the line 115 defining the top of the second region is located below the line 111 of BSFC. As a result, as compared to the second stage, the second region is further narrower while the third region is further wider.

As described above with reference to FIG. 5(a), the accelerator operation scoring unit 43 allocates the throttle opening range from zero to TH1 determined based on the detected engine rotational speed NE to the range from the position R to the position PA1 in the accelerator region Ar, the range from TH1 to TH2 to the range from the position PA1 to the position PA2, and the range from TH2 to TH3 to the range from the position PA2 to the position PA3. Because the width of the second region is narrower from the first through third stages, the value of TH2 is smaller from the first through third stages. Therefore, even for the same accelerator operation, the probability that the driving operation is determined as being a less fuel-efficient state is higher as the lifetime score rises from the first to third stages.

For example, consider a vehicle operating state shown by reference numeral 161 where the engine rotational speed is NEx and the throttle opening is THx. As shown in FIG. 15(a), the operating state 161 is located slightly above a center of the width W1 of the second region in the first stage. Therefore, the bar 39 extends to the right slightly past the center of the positions PA1 and PA2 as shown in FIG. 16(a). As shown in FIG. 15(b), the operating state 161 is substantially located at the upper limit of the width W2 (<W1) of the second region in the second stage. Therefore, the bar 39 substantially reaches the position PA2 as shown in FIG. 16(b). As shown in FIG. 15(c), the operating state 161 is located within the third region in the third stage. Therefore, the bar 39 extends to between the positions PA2 and PA3 as shown in FIG. 16(c).

Thus, in the case where the vehicle operating state by the accelerator operation is outside the first region, even for the same accelerator operation, the length of the bar 39 is longer as the lifetime score rises from the first through third stages, and hence the accelerator score value is lowered as shown in the map of FIG. 7. As the lifetime score rises from the first through third stages, a driver tries to perform the accelerator operation more carefully in order to raise the accelerator score, thereby improving the driving skill for improving the fuel efficiency.

FIG. 16 shows an example of the length of the bar 39 in each stage. As with the bar 39, even for the same accelerator operation, a color that is closer to the second color is determined as the background color 33 as the lifetime score rises from the first through third stages.

FIGS. 17(a) to 17(c) show maps used for the brake operation. The map in FIG. 17(a) is the same as FIG. 8(a), and is for the first stage. In the map of FIG. 17(a), the line 131 indicates the operating state considered as a predetermined sudden brake operation. The lines 133 and 135 partition the first through third regions. If the lifetime score is in the first stage, the brake operation scoring unit 44 refers to the map for the first stage to determine the length of the bar and the background color as described above.

FIG. 17(b) shows a map for the second stage, and FIG. 17(c) shows a map for the third stage. The line 131 is moved upward in the vertical axis direction as the lifetime score rises from the first through the third stages. An amount by which the line 131 is moved upward can be arbitrarily set. Here, in each stage, a ratio among a width W1 in the vertical axis direction of the first region, a width W2 in the vertical axis direction of the second region, and a width W3 in the vertical axis direction of the third region above the line 131 is constant ("width" indicates the width of the region when the vehicle speed is equal to or greater than about 15 km/h as shown in FIG. 8(a)). Accordingly, the width of each region is narrower as the line 131 is moved upward.

As described above with reference to FIG. 8(a), the brake operation scoring unit 44 allocates the acceleration range from zero to DR1 determined based on the detected vehicle speed VP to the range from the position R to the position PB1 in the brake region Br, the range from DR1 to DR2 to the range from the position PB1 to the position PB2, and the range from DR2 to DR3 to the range from the position PB2 to the position PB3. Because the width of each region is narrower from the first through third stages, the evaluation regarding the fuel efficiency is stricter even for the same brake operation, as the lifetime score rises from the first to third stages.

For example, consider a vehicle operating state shown by reference numeral 171 where the vehicle speed is VPx and the acceleration is DRx. As shown in FIG. 17(a), the operating state 171 is located within the first region in the first stage. Therefore, the bar 39 extends within a range from the position R to the position PB1 as shown in FIG. 18(a). As shown in FIG. 17(b), the operating state 171 is substantially located at the upper limit of the second region in the second stage. Therefore, the bar 39 substantially reaches the position PB1 as shown in FIG. 18(b). As shown in FIG. 17(c), the operating state 171 is located within the third region in the third stage. Therefore, the bar 39 extends to between the positions PB2 and PB3 as shown in FIG. 18(c).

Thus, even for the same brake operation, the length of the bar 39 is longer as the lifetime score rises from the first through third stages, and hence the brake score value is lowered as shown in the map of FIG. 9. As the lifetime score rises from the first through third stages, a driver tries to perform the brake operation more carefully in order to raise the brake score, thereby improving the driving skill for improving the fuel efficiency.

FIG. 18 shows an example of the length of the bar 39 in each stage. As with the bar 39, even for the same brake operation, a color that is closer to the second color is determined as the background color 33 as the lifetime score rises from the first through third stages.

In the above embodiment, a plurality of stages are established according to the lifetime score value. Alternatively, such establishment may not be made. In such a case, different maps according to the lifetime score value are used as described with reference to FIGS. 15 and 17, and marking the accelerator score and brake score is stricter as the lifetime score is higher. Because the above embodiment has three stages, the three maps corresponding to the stages are prepared. Alternatively, any number of stages may be established. Further, any number of maps may be established for each of the accelerator operation and the brake operation irrespective of the stage setting. The number of maps referred to for the accelerator operation may differ from the number of maps referred to for the brake operation.

### Control Flow

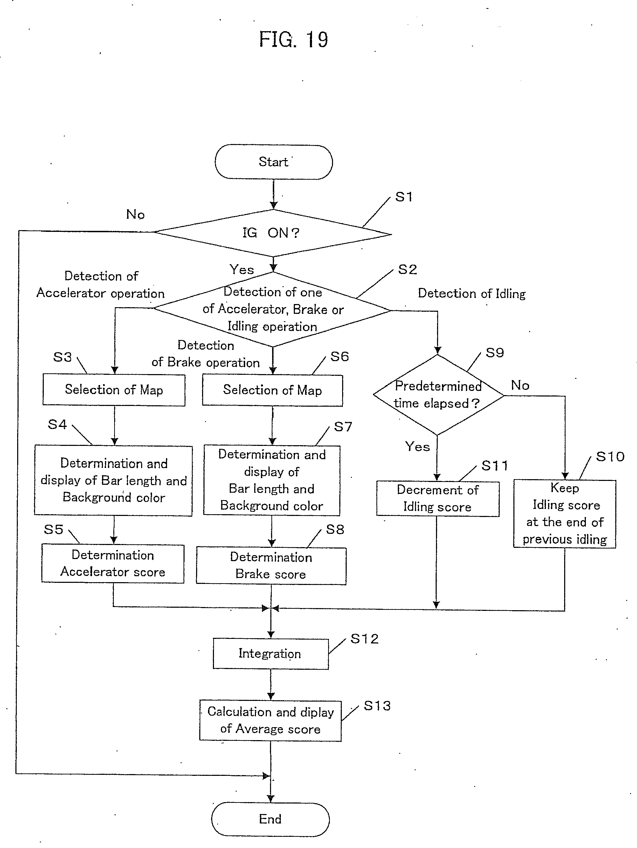

FIG. 19 shows an example of a control process flow, which is executed by the control unit 40, for performing the display indicating a state of fuel efficiency and determining a score indicating the state of fuel efficiency as described referring to the above embodiments. This process is performed at predetermined time intervals (for example, 100 milliseconds).

If the ignition switch is on in step S1, this process is performed. In step S2, one of the accelerator operation, brake operation, and idling operation is detected.

If the accelerator operation is detected, one of the maps of FIGS. 15(a) to 15(c) is selected from the memory according to the stage to which the current lifetime score value belongs in step S3. In step S4, the selected map is referred to based on the detected engine rotational speed NE and the detected throttle opening TH to determine and display the length of the bar and/or background color. In step S5, the accelerator score is determined by referring to the map as shown in FIG. 7. As described above, the maps of FIGS. 15(a) to 15(c) have been created based on the engine rotational speed and the throttle opening. Alternatively, these maps may be created based on another operating state parameter. Further, as described above with reference to FIG. 6, a finer gradation control may be performed for the background color.

If the brake operation is detected in step S2, one of the maps of FIGS. 17(a) to 17(c) is selected from the memory according to the stage to which the current lifetime score value belongs in step S6. In step S7, the selected map is referred to based on the detected vehicle speed VP and the detected acceleration DR to determine and display the length of the bar and/or the background color. In step S8, the brake score is determined by referring to the map as shown in FIG. 9. As described above, these maps of FIGS. 17(a) to 17(c) have been created based on the vehicle speed and the acceleration. Alternatively, these maps may be created based on another operating state parameter. As described above with reference to FIG. 6, a finer gradation control may be performed for the background color.

If the idling operation is detected in step S2, it is determined whether a predetermined time has elapsed from the start of the current idling operation in step S9. If the predetermined time has not elapsed, the idling score value at the end of the previous idling operation state is maintained in step S10. If the predetermined time has elapsed, the idling score is decremented by a predetermined value in step S11. As described above, the idling score at the start of the driving cycle is set to the initial value.

In step S12, the currently determined accelerator score, brake score, or idling score is added to the previous integrated value to calculate the current integrated value. In step S13, the current integrated value is divided by the elapsed time from the start of the driving cycle to calculate the average score. The average score is displayed in the score display region 35 (FIG. 2(b)) of the second display unit 15. As described above, the average score is expressed by the number of leaves in this embodiment. Alternatively, the average score may be expressed by other graphics, or may be displayed by a numerical value.

The average score is calculated and displayed at predetermined time intervals over the period of the driving cycle. The average score calculated at the end of the driving cycle is stored as the total score in the memory, and the lifetime score is calculated based on the total score.

In this embodiment, the time interval at which each score such as the accelerator score is calculated is equal to the time interval at which the average score is calculated. Alternatively, the latter may be set longer than the former (for example, the time interval at which the score is calculated is set to 100 milliseconds and the time interval at which the average score is calculated is set to one minute). In such a case, the length of the bar 39 and/or the background color 33 may be updated in synchronization with the time interval at which each score such as the accelerator score is calculated, while the score display region 35 is updated in synchronization with the time interval at which the average score is calculated. Further, in this embodiment, the total score and the lifetime score are calculated on a driving cycle basis. Alternatively, the total score and the lifetime score may be calculated on another predetermined period basis.

In this embodiment, as shown in FIG. 1, the first display unit 13 and the second display unit 15 are implemented as a display device on the instrument panel. These display units may be implemented on any display device. For example, the displays as shown in FIGS. 2(a) and 2(b) may be performed on the display apparatus 17 of FIG. 1. The displays as shown in FIG. 14 may be performed on the display apparatus 17.

### Advice Display

Referring back to FIG. 4, a third display control unit 53 will be described. The third display control unit 53 displays information such as a score described above and advice on the drive operation on the display apparatus 17 in order to encourage a driver to more efficiently learn the driving operation for improving the fuel efficiency. This display operation will be described..

In this embodiment, the control unit 40 is configured to calculate a fuel efficiency (hereinafter referred to as instantaneous fuel efficiency) at the same timing as the calculation of the average score. Because the average score is calculated at predetermined time intervals, the instantaneous fuel efficiency indicates a fuel efficiency per the time interval. On the other hand, the control unit 40 divides an integrated value of the instantaneous fuel efficiency over a period from the start of the current driving cycle to the present time by a time length from the start of the current driving cycle to the present time to calculate an average fuel efficiency of the driving cycle. A pair of the average fuel efficiency and the corresponding average score is stored in a ring buffer of the memory of the control unit 40.

Further, in this embodiment, the average score calculating unit 48 calculates an average score (hereinafter referred to as driving-operation-based average score) for each kind of the driving operation at the same timing as the calculation of the average score. That is, every time the accelerator operation is performed, the time during which the accelerator operation is performed is measured with a timer. Only the accelerator score is integrated to calculate an accelerator integrated score value. An accelerator average score is calculated by dividing the accelerator integrated score value by the accelerator operation time thus measured. For example, in a case where the driving as shown in FIG. 11 is performed, the accelerator average score of the accelerator operation at time t11 is calculated by (S2+S5+S7+S10)/((t2-t1)+(t5-t4)+(t7-t6)+(t10-t9)). A similar calculation is performed for the brake operation and the idling operation to determine a brake average score and an idling average score. In the calculation of the idling average score, the predetermined time as described with reference to FIG. 10 may be included (for example, the idling average score at time t1 is calculated by S1/t1 in the example of FIG. 11), or the predetermined time may not be included (for example, the idling average score at time t1 is calculated by S1/ (t1-predetermined time) in the example of FIG. 11). A pair of the driving-operation-based average score and the corresponding average score may be also stored in a ring buffer of the memory.

In this embodiment, the control unit 40 further calculates the average value of the score and the average value of the fuel efficiency every five minutes. Specifically, as shown in FIG. 11, the accelerator score, the brake score, or the idling score are integrated at five-minute time intervals, and the average score value on a five-minute basis is calculated every five minutes by dividing the integrated score value by the time length (that is, five minutes). Similarly, the instantaneous fuel efficiency is integrated at five-minute time intervals, and the average fuel efficiency value on a five-minute basis is calculated by dividing the integrated value by the time length (that is, five minutes). Here, "five minutes" is an example. Another time interval may be used. These average values on a five-minute basis may be stored in a ring buffer of the memory.

Preferably, in order to provide a driver with an advice for improving the fuel efficiency from the viewpoint of the vehicle speed, a state of the vehicle speed is determined. In this embodiment, the operating state detecting unit 41 detects a vehicle speed at predetermined time intervals (which may be identical to the timing at which the score such as the accelerator score is calculated) in each driving cycle. The vehicle speed can be detected with a vehicle speed sensor that is included in the various sensors 65 (FIG. 1). A vehicle speed state determining unit 54 determines a state of the vehicle speed based on a ratio of a travel time in which the vehicle speed is within a predetermined range. In this embodiment, a range less than a predetermined low threshold and a range greater than a predetermined high threshold are used as the predetermined range.

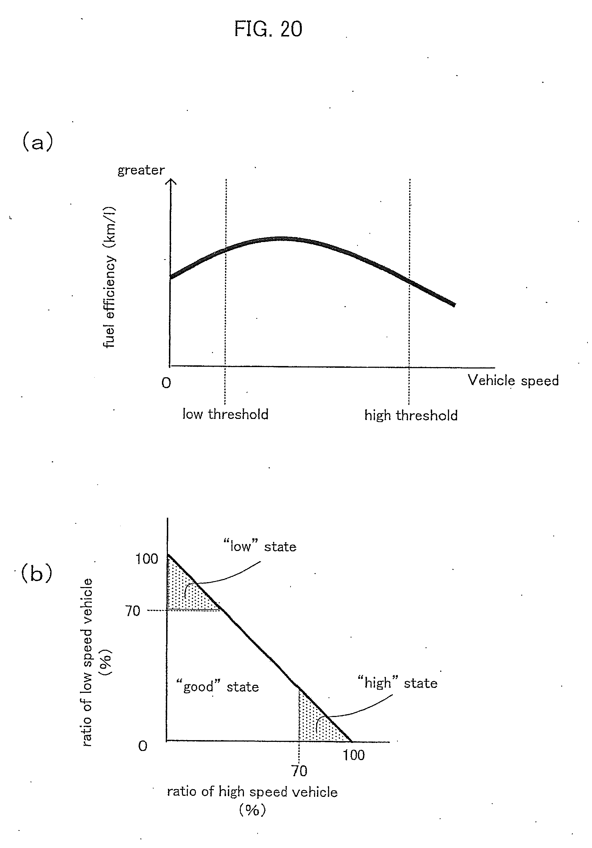

FIG. 20(a) schematically shows the fuel efficiency corresponding to the vehicle speed, which was obtained by a simulation or the like. As described above, an excessively high vehicle speed possibly deteriorates the fuel efficiency. On the other hand, an excessively low vehicle speed tends to deteriorate the fuel efficiency as compared to a medium vehicle speed between the low threshold (in this example, 20 km/h) and the high threshold (in this example, 110 km/h). As the travel time at such an excessively high vehicle speed or excessively low vehicle speed is longer, the state of fuel efficiency may be deteriorated, and hence the accelerator average score value may be lowered.

As described above, the fuel efficiency according to the accelerator operation is deteriorated at an excessively high vehicle speed even if the amount of depressing the accelerator pedal is constant. Further, the fuel efficiency according to the accelerator operation is also deteriorated when the amount of depressing the accelerator pedal is rapidly increased to perform a sudden acceleration. It is difficult for a driver to recognize whether the deterioration of the fuel efficiency is caused by the vehicle speed or the acceleration from the bar 39 and/or the background color 33 during driving. Therefore, it is preferable that a driver is informed of the fact that traveling at an excessively high vehicle speed is performed. Further, because traveling at an excessively low vehicle speed tends to deteriorate the fuel efficiency as shown in FIG. 20(a), it is preferable to draw driver's attention to such traveling in order to further improve the fuel efficiency.

In this embodiment, a travel time during which traveling at a speed less than the low threshold is performed and/or a travel time during which traveling at a speed greater than the high threshold are detected. In response to the detection, an advice to suppress such traveling is provided to a driver. The driver can recognize that the fuel efficiency is deteriorated, or may be deteriorated due to the vehicle speed. The driver can learn the driving skill for improving the fuel efficiency with being careful about the vehicle speed.

In order to provide the advice as described above, every time the vehicle speed is detected, the vehicle speed state determining unit 54 determines whether the detected vehicle speed is less than the low threshold or greater than the high threshold. In order to examine a ratio of a travel time during which traveling at an excessively low vehicle speed is performed and traveling at an excessively high vehicle speed is performed with respect to an elapsed time from the start of the current driving cycle, the vehicle speed state determining unit 54 counts the number of frequencies at which the vehicle speed less than the low threshold is detected and the number of frequencies at which the vehicle speed greater than the high threshold is detected over the current driving cycle. Then, a ratio (expressed by percentage) of the frequencies at which the vehicle speed less than the low threshold is detected and a ratio (expressed by percentage) of the frequencies at which the vehicle speed greater than the high threshold is detected are calculated with respect to the frequencies at which the vehicle speed is detected from the start of the current driving cycle to the present time. Here, the former ratio is referred to as a low vehicle speed ratio and the latter ratio is referred to as a high vehicle speed ratio. This calculation may be performed at the same timing as the calculation of the average score described above. These ratio values may be stored, for example in a ring buffer, in association with the corresponding average score.

The vehicle speed state determining unit 54 refers to a map as shown in FIG. 20(b) to determine the state of the vehicle speed based on the low vehicle speed ratio and high vehicle speed ratio thus calculated. The map of FIG. 20(b) may be stored in the memory of the control unit 40. It is determined that the vehicle speed state is a "high" state if the high vehicle speed ratio is equal to or greater than a predetermined value (in this embodiment, the predetermined value is 70%, and hence traveling at a speed greater than the high threshold was performed during 70% of the elapsed time from the start of the current driving cycle to the present time). It is determined that the vehicle speed sate is a "low" state if the low vehicle speed ratio exceeds the predetermined value (in this embodiment, the predetermined value is 70%, and hence traveling at a speed less than the low threshold is performed during 70% of the elapsed time from the start of the current driving cycle to the present time). If the "high" state or the "low" state is not determined, it is determined that the vehicle speed state is a "good" state. 70% used for the predetermined value is an example. The predetermined value may be set to another value. However, the predetermined value is preferably set to a value greater than 50% considering the aim to cause a driver to suppress a rise in the ratio of the travel time at a low vehicle speed or high vehicle speed. The predetermined value may be different between the low vehicle speed ratio and the high vehicle speed ratio. For example, because the fuel efficiency at the vehicle speed greater than the high threshold is lower than the fuel efficiency at the vehicle speed less than the low threshold as shown in FIG. 20(a), the predetermined value for the high vehicle speed ratio may be set lower than the predetermined value for the low vehicle speed ratio. In this embodiment, three states are established for the vehicle speed state. Alternatively, two states of the "high" state and the other state (that is, "good" state) may be established for the vehicle speed state. Or, two states of the "low" state and the other state (that is, "good" state) may be established.

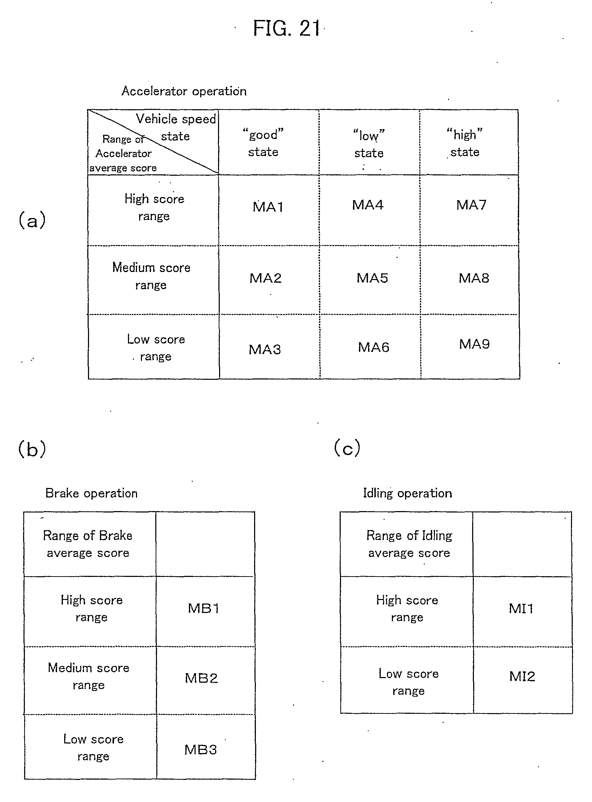

FIG. 21 schematically shows a configuration of a message table 55 stored in the memory (but another storage may be used) of the control unit 40. The message table 55 stores advice messages according to the value of the driving-operation-based score for each driving operation. The advice messages are used for providing a driver with an advice from the viewpoint of fuel efficiency of the driving operation.

More specifically, for the accelerator operation, the advice messages are stored according to the vehicle speed state and the accelerator average score value as shown in FIG. 21(a). In this embodiment, three ranges are established for the accelerator average score value. That is, there are a low score range from zero to 29 points, a medium score range from 30 to 69 points, and a high score range from 70 to 100 points. The three vehicle speed states including the "good" state, "low" state, and "high" state exist in each of the ranges of the accelerator average score value. Accordingly, there are at least nine kinds of messages MA1 to MA9 to be pre-stored as the advice messages.

For the brake operation, the advice messages are stored according to the brake average score value as shown in FIG. 21(b). As with the accelerator average score, a low score range, a medium score range, and a high score range are established for the brake average score value. Accordingly, there are at least three kinds of messages MB1 to MB3 to be pre-stored as the advice messages. For the idling operation, the advice messages are stored according to the idling average score value as shown in FIG. 21(c). A low score range from zero to 49 points and a high score range from 50 to 100 points are established in the example of the figure. Accordingly, there are at least two kinds of messages MI1 and MI2 to be pre-stored as the advice messages.

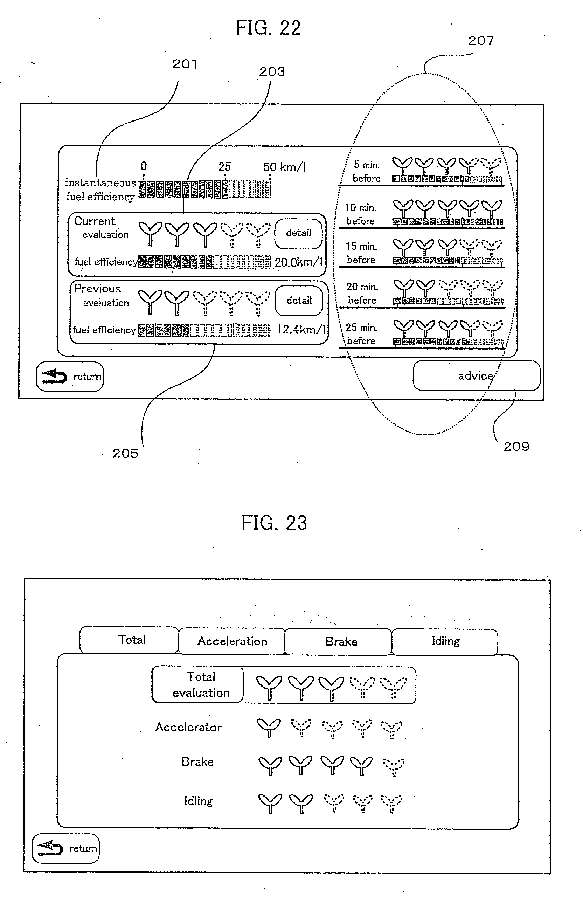

A control regarding a display of the advice messages will be described. FIG. 22 shows an example of a basic screen that the third display control unit 53 displays on the display apparatus 17 in response to a passenger (including a driver) selecting a predetermined button of a predetermined menu displayed on the display apparatus 17.

The basic screen includes a region 201 indicating a graph of the instantaneous fuel efficiency, a region 203 indicating the average score and average fuel efficiency in the current driving cycle, a region 205 indicating the total score and average fuel efficiency in the previous driving cycle, and a region 207 indicating time-series data of the average score in the current driving cycle. A button 209 is provided for displaying an advice for each of predetermined items.

The third display control unit 53 displays the current instantaneous fuel efficiency as a bar graph in the region 201. During vehicle traveling, because the instantaneous fuel efficiency is calculated at predetermined time intervals, the instantaneous fuel efficiency displayed in the region 201 is updated at the predetermined time intervals.

In this embodiment, the instantaneous fuel efficiency is displayed such that a scale from 0 to 25 km/l differs from a scale from 25 to 50 km/l. In general, because the fuel efficiency is often implemented in the range from 0 to 25 km/l, the scale from 0 to 25 km/l is more largely displayed than the scale from 25 to 50 km/l, which allows a driver to easily view the fuel efficiency region that is prone to be changed during normal travel.

The "evaluation" in the region 203 is displayed by expressing the current average score with the number of leaves" (shown by solid lines). The number of leaves thus displayed is equal to the average score displayed in the score display region 35 of the second display unit 15, that is, both synchronize with each other. In FIG. 22, leaves except for the solid-line leaves are expressed by dotted lines such that a driver can easily recognize that the maximum of the average score corresponds to ten leaves. Alternatively, the dotted-line leaves may not be displayed, or only the stems may be displayed as shown in FIG. 2(b).

The "fuel efficiency" in the region 203 indicates the current average fuel efficiency, which is expressed by both the bar graph and the numerical value. Because the control unit 40 calculates the average score and the average fuel efficiency at predetermined time intervals, the evaluation and fuel efficiency displayed in the region 203 are updated at the predetermined time intervals.

The "evaluation" in the region 205 indicates the final value, that is, the total score of the average score in the previous driving cycle. The "fuel efficiency" indicates the average fuel efficiency in the previous driving cycle, which is expressed by both the bar graph and the numerical value. The third display control unit 53 reads the average score (total score) and the corresponding average fuel efficiency that have been calculated and stored at the end of the previous driving cycle to display them in the region 205.

A five-minute-based average score value and average fuel efficiency value, at 5, 10, 15, 20, and 25 minutes before the present time, are displayed in the region 207. As described above, the five-minute-based average score value and the five-minute-based average fuel efficiency value are sequentially stored in a ring buffer every time these values are calculated. Therefore, the third display control unit 53 reads the five-minute-based average score value and the five-minute-based average fuel efficiency value at 5, 10, 15, 20, and 25 minutes before the present time from the ring buffer, and displays these values by leaves and bar graph. The leaves and bar graph are displayed in a similar manner to that of the average score and average fuel efficiency described above. The display in the region 207 is updated every five minutes. Thus the state of fuel efficiency can be confirmed at five-minute intervals.

In response to a passenger selecting a "detail" button in the region 203, the third display control unit 53 displays a screen as shown in FIG. 23. Here, "total evaluation" has the same contents (that is, the same number of leaves) as the "evaluation" in the region 203, which indicates the current average score.

In this screen, the evaluation is made for each driving operation such as the accelerator operation, brake operation, and vehicle stopping operation leading to the idling operation state. The third display control unit 53 displays the accelerator average score by the number of leaves (solid lines) calculated at the same timing as the average score in the "evaluation" calculated by the average score calculating unit 48 as described above. Similarly the third display control unit 53 displays the brake average score and idling average score, calculated at this timing, by the number of leaves. The conversion from these score values into the number of leaves can be implemented by the same technique as the average score described above. As described above with reference to the region 203 of FIG. 22, leaves except for the solid-line leaves are expressed by dotted lines in order to cause a driver to easily recognize that the maximum score corresponds to ten leaves. Alternatively, the dotted-line leaves may not be displayed. Only the stems may be displayed.

A driver can recognize whether each driving operation is fuel-efficient by viewing the screen of FIG. 23. Therefore, the driver can determine which driving operation he/she should pay attention for improving the fuel efficiency.

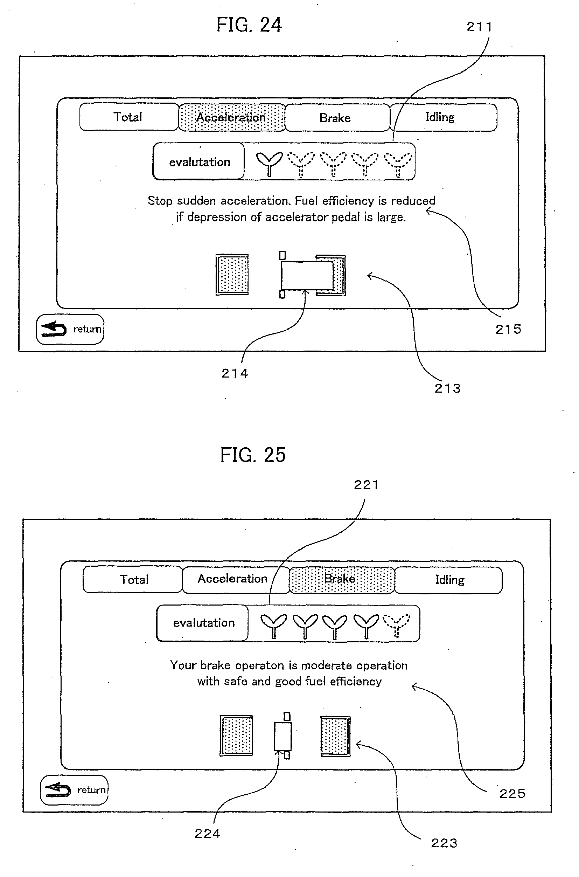

Acceleration, brake, and idling tabs are provided in this screen. In response to the acceleration tab being selected, the third display control unit 53 displays a screen as shown in FIG. 24. The evaluation (the number of leaves) in the region 211 displayed on this screen matches the evaluation (the number of leaves) in the "accelerator" of FIG. 23. A coaching region indicated by reference numeral 213 has a similar configuration to that of FIG. 2(b). A bar 214 having a length corresponding to the accelerator average score is displayed. The third display control unit 53 refers to the map as shown in FIG. 7 based on the accelerator average score to determine the length of the bar 214, and displays the bar214 having the determined length in the region 213. Because the accelerator average score is low in this example, the bar 214 extends into the hatched region.

A region 215 is an advice region where an advice message is displayed according to the accelerator average score value shown in the "evaluation". The third display control unit 53 refers to the map as shown in FIG. 21(a) based on the accelerator average score value and the vehicle speed state, which is determined at the same timing as the calculation of the accelerator average score, to extract a corresponding advice message and then displays the extracted advice message in the advice region 215. In this example, because the accelerator average score is 20 points, it is determined that a range to which the accelerator average score belongs is the low score range. Assuming that the vehicle speed state currently determined is "good", the third display control unit 53 extracts the corresponding advice message MA3 from the table of FIG. 21(a), and displays the advice message MA3 in the advice region 215. An example of the message MA3 is shown in the figure. Because the accelerator average score is low, the advice message MA3 provides an advice to encourage a driver to suppress a sudden acceleration for improving the fuel efficiency.

Another example of the advice message is described. When the accelerator average score is in the high score range (in such a case, the bar 214 extends into the non-hatched region that represents a good state of fuel efficiency) and the vehicle speed state is in the "good" state, the advice message MA1 is selected. The advice message MA1 may be a message for informing a driver that the accelerator operation with a higher safety and good fuel efficiency is performed. For example, the advice message MA1 is "Your accelerator operation is excellent."

When the accelerator average score is in the medium score range while the vehicle speed state is in the "good" state, the advice message MA2 is selected. It is preferable that the advice message MA3 for the low score range more strongly draws driver's attention to the accelerator operation as compared to the advice message MA2 for the medium score range. For example, "Gently depress the accelerator pedal" may be displayed as the advice message MA2.

When the vehicle speed state is in the "high" state, one of the advice messages MA7 to MA9 is selected. It is preferable that an advice for encouraging a driver to suppress a high-speed travel to improve the fuel efficiency is included in these advice messages irrespective of the score range. For example, a message of "Fuel consumption increases with vehicle speed on high-speed travel. More fuel-efficient driving is expected with moderate vehicle speed" may be included. When the vehicle speed state is in the "low" state, one of the advice messages MA4 to MA6 is selected. Irrespective of the score range, a message such as "Fuel efficiency is reduced when low-speed travel continues at, for example, traffic jams" may be included in these advice messages. Thus, a driver can be informed of the risk that the fuel efficiency is deteriorated when low-speed travel is performed for a long time.

Thus, by viewing the screen as shown in FIG. 24, a driver can receive an advice on what he/she should pay attention to while recognizing the evaluation of his/her accelerator operation. Because a driver also receives an advice from the viewpoint of vehicle speed, the driver can learn the accelerator operation that suppressing the deterioration of the fuel efficiency.

On the other hand, in response to the brake tab being selected in the screen of FIG. 23, the third display control unit 53 displays a screen as shown in FIG. 25. The evaluation (the number of leaves) in the region 221 displayed on the screen of FIG. 25 matches the evaluation (the number of leaves) in the "brake" of FIG. 23. A coaching region 223 has a similar configuration to that of FIG. 2(b). A bar 224 having a length corresponding to the brake average score is displayed. The third display control unit 53 refers to the map as shown in FIG. 9 based on the brake average score to determine the length of the bar 224, and then displays the bar 224 having the determined length in the region 223. Because the brake average score is high in this example, the bar 224 remains in the non-hatched region that represents a good state of fuel efficiency.

A region 225 is an advice region where an advice message is displayed according to the brake average score value shown in the "evaluation". The third display control unit 53 refers to the map as shown in FIG. 21(b) based on the brake average score value calculated as described above to extract a corresponding advice message, and then displays the extracted advice message in the advice region 225. In this example, because the brake average score is 80 points, it is determined that a score range to which the brake average score belongs is the high score range. The third display control unit 53 extracts the corresponding advice message MB1 from the map of FIG. 21(b), and displays the advice message MB1 in the advice region 225. FIG. 25 shows an example of the message MB1. Because the brake average score is high, the advice message MB1 informs a driver that good brake operation is performed.

Another example of the advice message is described. When the brake average score is in the medium score range, for example, a message of "Fuel-efficient driving can be achieved by keeping sufficient inter-vehicle distance and taking the foot off the accelerator pedal early" may be used as the advice message MB2. When the brake average score is in the low score range, a message of "Sudden brake is not good for fuel efficiency. Try predictive driving while keeping sufficient inter-vehicle distance" may be used as the advice message MB3. Thus, the advice message MB3 for the low score range may more strongly encourage a driver to perform a careful brake operation as compared to the advice message MB2 for the medium score range.

Thus, by viewing the screen as shown in FIG. 25, a driver can receive an advice on what he/she should pay attention to while recognizing the evaluation of his/her brake operation.

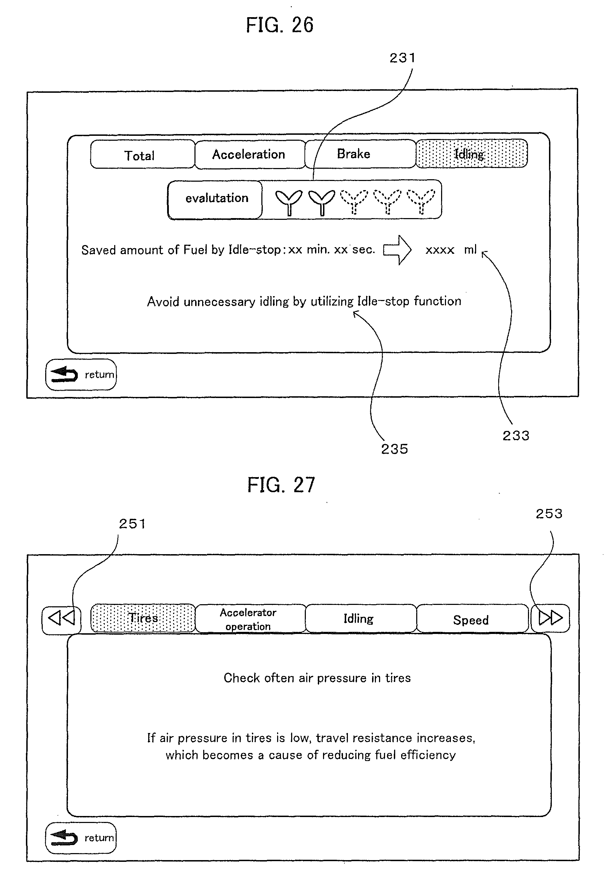

FIG. 26 shows an example of a screen displayed in response to the idling tab being selected in FIG. 23. The evaluation (the number of leaves) in the region 231 displayed in this screen matches the evaluation (the number of leaves) in the "idling" of FIG. 23. This screen is for a vehicle capable of perform the idle-stop. The total of time during which the idle-stop is performed in a period from the start of the current driving cycle to the present time and an amount of fuel corresponding to the total of time are calculated by the control unit 40 (this calculation can be performed at the same timing as the calculation of the average score). The third display control unit 53 displays the total of time and the fuel amount thus calculated in the region 233. As described above, the idle-stop is an operating state where the engine is stopped while auxiliary instrument is driven by the motor when the vehicle is temporarily stopped. Because the engine is stopped, the fuel amount can be saved by performing the idle-stop. By displaying the saved amount of fuel, a driver can be encouraged to perform the idle-stop when the vehicle is temporarily stopped.

A region 235 is an advice region where an advice message is displayed according to the idling average score value shown in the "evaluation". The third display control unit 53 refers to the table of FIG. 21(c) based on the idling average score value calculated as described above to extract a corresponding advice message, and then displays the extracted advice message in the advice region 235. In this example, because the idling average score is 40 points, it is determined that the idling average score is in the low score range. The third display control unit 53 extracts the corresponding advice message MI2 from the table of FIG. 21(c), and displays the advice message MI2 in the advice region 235. An example of the message MI2 is shown in the figure. Because the idling average score is low, the advice message MI2 encourages a driver to suppress unnecessary idling. As another example of the advice message MI12, for example, a message of "Avoid long-time idling" may be used. The advice message MI1 used when the idling average score is in the high score range may be a message that the idle-stop is sufficiently utilized, which allows a driver to be informed that appropriate idling is performed.

Thus, by viewing the screen as shown in FIG. 26, a driver can receive the advice on what he/she should pay attention to while recognizing the evaluation of the driving operation for causing the vehicle to stop such that the engine is in an idling operation.

FIGS. 23 to 26 also apply to a case where "detail" in the region 205 for the previous driving cycle is selected in FIG. 22. In such a case, the average score indicates the total score that is the final value of the average score in the previous driving cycle. The accelerator average score, the brake average score, the idling average score, the vehicle speed state, and/or the saved amount of fuel by the idle-stop are calculated or determined at the same timing as the total score.

Thus, an advice message is provided to a driver for each state of fuel efficiency of each driving operation. Therefore, for each driving operation, a driver can learn the driving skill for improving the fuel efficiency.

In this embodiment, the screens are configured that the advice messages are obtained for the current driving cycle and the previous driving cycle. Alternatively, a history of many more driving cycles may be displayed on the display apparatus 17 such that a desired past driving cycle may be selected from the history. In response to this selection, the screens as shown in FIGS. 23 to 26 may be displayed.

The kinds of information and the layout of the information displayed on the screens of FIGS. 22 to 26 are only by way of example. Other information may be added. For example, the lifetime score may be displayed in the basic screen (FIG. 22). In the region 207, a scrolling function may be added such that the past average scores are further visible. In response to a predetermined operation performed on the screen by a passenger, a graph of the average score or a graph of the average fuel efficiency may be displayed as shown in FIG. 11, or a graph of the lifetime score may be displayed as shown in FIG. 13.

In a case where the travel distance is excessively short in the driving cycle, and/or a case where the maximum vehicle speed is excessively low in the driving cycle, the accelerator score and the brake score appropriately reflecting the driving skill may not be obtained. Therefore, when at least one of the case where the travel distance in the driving cycle is less than a predetermined value and the case where the maximum vehicle speed in the driving cycle is less than a predetermined value is met, the data such as the accelerator average score, brake average score, and average score that are calculated in the driving cycle may be discarded such that the driving cycle is not recorded in the history. In such a case, the driving cycle is not displayed on the screen of FIG. 22. Alternatively, in a case where such driving cycle is recorded in the history, a message indicating that the driving cycle cannot be evaluated may be pre-stored in the message table 55. When this driving cycle is selected on the screen of FIG. 22, the third display control unit 53 reads from the table 55 the message indicating that the driving cycle cannot be evaluated, and displays this message. Thus, a driver can recognize which driving cycle was not recorded or evaluated in the history.

In response to "advice" button 209 being selected in the basic screen of FIG. 22, the third display control unit 53 displays an advice screen of FIG. 27. The advice screen includes a plurality of advice items regarding the fuel efficiency. A desired advice item is selectable by arrows 251 and 253. In this embodiment, advice items such as road traffic information, idling, accelerator operation, speed, air conditioner, tires, baggage, air resistance, and travel distance are provided. The advice items may be arbitrarily pre-established.

An advice message regarding the fuel efficiency is pre-stored in the message table 55 of FIG. 4 for each of the advice items. In response to an advice item being selected on the screen of FIG. 27 by a passenger, the third display control unit 53 reads the advice message for the selected advice item from the message table 55 and displays it as shown in FIG. 27.

FIG. 27 shows an example of the advice message displayed when the advice item of "tires" is selected. This message encourages a driver to often check the air pressure in the tires in order to improve the fuel efficiency.

An example of other advice messages is described. When the advice item of "road traffic information" is selected, for example, a message of "Fuel would be saved if you pre-select time and route with less traffic" is displayed.

When the advice item of "baggage" is selected, for example, a message of "Fuel efficiency is affected by baggage. Please unload unnecessary baggage" is displayed. When the advice item of "speed" is selected, for example, a message of "Fuel efficiency is reduced with travel speed on high-speed travel. Keep moderate speed" is displayed.

As to the advice item of "accelerator operation", for example, a message of "Large depression of accelerator pedal reduces fuel efficiency" is displayed or a message of "Predict circumstances and take off the accelerator pedal early to use engine brake for deceleration" is displayed. As to the advice item of "travel distance", for example, a message of "repeated short-distance travel tends to reduce fuel efficiency." is displayed. As to the advice item of "air conditioner", for example, a message of "When air conditioner is used, selecting FULL AUTO mode leads to efficient control for suppressing fuel consumption" is displayed.

Thus, practical information on the fuel efficiency is pre-stored in the form of message, and the information is displayed upon a request of a driver. A driver can receive driving knowledge for improving the fuel efficiency.

### Communication System

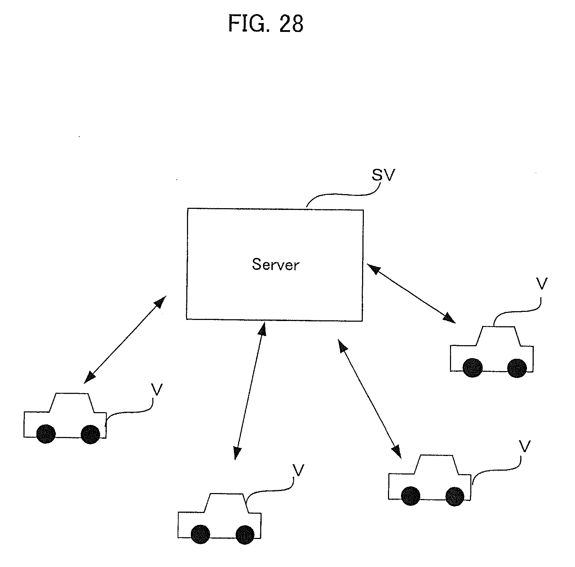

FIG. 28 shows a communication system comprising a plurality of vehicles V on which the apparatus shown in FIG. 4 is mounted and a server SV. Each vehicle V comprises a navigation system configured to communicate with the server SV.

Each vehicle V can transmit any of the accelerator average score, brake average score, idling average score, average score, total score, and lifetime score to the server SV. It can be arbitrarily set what is transmitted. For example, the transmission may be activated by the navigation system of the vehicle V. Alternatively, the server SV may periodically access the navigation system of the vehicle V to acquire the information.

The server SV ranks the accelerator average score, brake average score, idling average score, average score, total score, and/or lifetime score, which are transmitted from the vehicle V. Any ranking may be implemented. For example, the vehicles compete in the accelerator average score, brake average score, idling average score, average score, total score, and lifetime score over a predetermined period (for example, one week or one month). After the predetermined period has elapsed, the vehicles may be ranked in descending order of the average score or total score, in descending order of the lifetime score, in descending order of the accelerator average score, in descending order of the brake average score, and/or in descending order of the idling average score.

Further, for example, the vehicles compete in the lifetime score over a relatively long term (several months through one year). The vehicles may be ranked in order of arrival at the third stage (in this embodiment, in order of the lifetime score reaching 30000 points as shown in FIG. 13). The ranking may be performed in each kind of the vehicle or each area. In a case where a vehicle is shared by a plurality of drivers, each driver may transmit any of the accelerator average score, brake average score, idling average score, average score, total score, and/or lifetime score to the server SV such that the drivers compete with each other.

As to the driving operation (the accelerator operation, the brake operation and the vehicle stopping operation for the idling operation) of one or more vehicles that have a higher score, information on how to implement the driving operation (for example, information on the driving history of the vehicle, information on travel routes of the vehicle, and information on the idling time of the vehicle) may be shared among the vehicles V through the server SV. The shared information may be displayed on the display apparatus 17 of each vehicle V. The driving history may be the number of times of each driving operation in each driving cycle, a score history, a travel route history, an average vehicle speed history, or an average engine rotational speed history.

Such ranking allows a driver to enjoy learning the driving skill for improving the fuel efficiency. A driver can obtain a wide range of knowledge about the driving operation regarding the fuel efficiency by sharing the information regarding the fuel efficiency among vehicles.

Although the specific embodiments of the invention are described above only by way of example, the invention is not limited to the embodiments. Although the embodiments partially refer to the hybrid vehicle, the invention can be applied to various vehicles such as a gasoline vehicle and a Diesel vehicle.

## Claims

1. An apparatus mounted on a vehicle, comprising:
a storage means for, for each driving operation to be performed by a driver of the vehicle and each state of fuel efficiency corresponding to each driving operation, storing at least one advice message indicating an advice about the state of fuel efficiency;
a fuel efficiency state determination means for, for each driving operation performed by the driver of the vehicle, determining a state of fuel efficiency of the vehicle according to the performed driving operation; and
a display means for, in response to any driving operation being selected on a predetermined display screen, referring to the storage means based on the selected driving operation and the determined state of fuel efficiency for the selected driving operation, to read and display an advice message corresponding to the selected driving operation and the determined state of fuel efficiency.

2. The apparatus of claim 1, wherein the driving operation includes an operation for driving the vehicle.

3. The apparatus of claim 1 or 2, wherein the driving operation includes an operation for braking the vehicle.

4. The apparatus of any one of claims 1 to 3, wherein the driving operation includes an operation for causing the vehicle to stop such that an engine of the vehicle is in an idling operation.

5. The apparatus of any one of claims 1 to 4, wherein the display means performs a display indicating the determined state of fuel efficiency together with the advice message.

6. The apparatus of any one of claims 1 to 5, wherein the advice message includes a message for improving the state of fuel efficiency.

7. The apparatus of any one of claims 2 to 6, further comprising a determination means for determining, as a vehicle speed state, whether a ratio of a travel time in which a speed of the vehicle is within a predetermined range to a predetermined period is equal to or greater than a predetermined value, or the ratio is less than the predetermined value,
wherein, in the storage means, the advice messages for each state of fuel efficiency corresponding to the operation for driving the vehicle further includes an advice message for each vehicle speed state, and
wherein, when the selected driving operation is the operation for driving the vehicle, the display means reads from the storage means an advice message corresponding to the determined vehicle speed state, among the advice messages corresponding to the selected driving operation and the determined state of fuel efficiency, and displays the advice message thus read.

8. The apparatus of claim 7, wherein the predetermined range includes a first range above a first threshold, and
wherein the determination means determines the vehicle speed state by determining whether a ratio of a first travel time in which the speed of the vehicle is within the first range to the predetermined period is equal to or greater than a first predetermined value, or the ratio is less than the first predetermined value.

9. The apparatus of claim 8, wherein the predetermined range further includes a second range below a second threshold, and
wherein the determination means determines the vehicle speed state by determining whether a ratio of a first travel time in which the speed of the vehicle is within the first range to the predetermined period is equal to or greater than the first predetermined value, a ratio of a second travel time in which the speed is within the second range to the predetermined period is equal to or greater than a second predetermined value, or the ratio of the first travel time to the predetermined period is less than the first predetermined value while the ratio of the second travel time to the predetermined period is less than the second predetermined value.

10. The apparatus of any one of claims 1 to 9, wherein the state of fuel efficiency is expressed by a driving-operation-based score determined for each driving operation over a predetermined period, and
wherein, for each driving operation, the fuel efficiency state determination means determines, every time the driving operation is detected in the predetermined period, a score indicating the state of fuel efficiency based on a vehicle operating state according to the detected driving operation, integrates the score for each driving operation over the predetermined period to calculate an integrated score value, and calculates the driving-operation-based score by dividing the integrated score value by a duration of the driving operation in the predetermined period.

11. The apparatus of any one of claims 1 to 10, further comprising a means for, every time any driving operation is detected, determining a score indicating the state of fuel efficiency based on a vehicle operating state according to the detected driving operation, integrating the score for all the driving operations to calculate an integrated score value over the predetermined period, and calculating a total score indicating a state of fuel efficiency for all the driving operations in the predetermined period by dividing the integrated score value by the length of the predetermined period.

12. The apparatus of any one of claims 7 to 11, wherein the predetermined period is a driving cycle period from start to stop of an engine of the vehicle.

13. The apparatus of any one of claims 10 to 12, further comprising a means for transmitting at least one of the driving-operation-based score and the total score to a predetermined server,
wherein the server ranks the at least one of the driving-operation-based score and the total score thus received and at least one of the driving-operation-based score and the total score that are calculated by and received from another apparatus connected to and in communication with the server, and
wherein the display means receives from the server and displays a result of the ranking performed by the server.

14. The apparatus of claim 12, comprising:
a means for calculating a lifetime score by adding the total score calculated in a current driving cycle to the total score calculated in a previous driving cycle; and
a means for transmitting the lifetime score to a predetermined server,
wherein the server ranks the received lifetime score and a lifetime score that is calculated by and received from another apparatus connected to and in communication with the server, and
wherein the display means receives from the server and displays a result of the ranking performed by the server.

## Amended claims

### Amended claims under Art. 19.1 PCT

**1.** (Amended) An apparatus mounted on a vehicle, comprising:
a storage means for storing, for each driving operation to be performed by a driver of the vehicle and for each score indicating a state of fuel efficiency corresponding to each driving operation, at least one advice message indicating an advice about the state of fuel efficiency;
a driving-operation-based score determining means for determining as a driving-operation-based score, for each driving operation performed by the driver, a score indicating a state of fuel efficiency of the vehicle by referring, every time a driving operation is detected over a driving cycle from start to stop of an engine of the vehicle, to a predetermined map based on a vehicle operating state according to the detected driving operation;
a display means for referring, in response to any driving operation being selected on a predetermined display screen, to the storage means based on the selected driving operation and the determined score for the selected driving operation, to read and display an advice message corresponding to the selected driving operation and the determined score;
a total score determining means for determining a total score indicating a state of fuel efficiency for all the driving operations in the driving cycle, based on the driving-operation-based score determined for each driving operation every time the driving operation is detected over the driving cycle; and
a lifetime score determining means for determining a lifetime score by adding the total score determined in a current driving cycle to the total score determined in a previous driving cycle,
wherein the driving-operation-based score determining means selects the predetermined map to be referred to according to the value of the lifetime score.

**2.** The apparatus of claim 1, wherein the driving operation includes an operation for driving the vehicle.

**3.** The apparatus of claim 1 or 2, wherein the driving operation includes an operation for braking the vehicle.

**4.** The apparatus of any one of claims 1 to 3, wherein the driving operation includes an operation for causing the vehicle to stop such that an engine of the vehicle is in an idling operation.

**5.** (Amended) The apparatus of any one of claims 1 to 4, wherein the display means performs a display indicating the determined score together with the advice message.

**6.** The apparatus of any one of claims 1 to 5, wherein the advice message includes a message for improving the state of fuel efficiency.

**7.** (Amended) The apparatus of any one of claims 2 to 6, further comprising a determination means for determining, as a vehicle speed state, whether a ratio of a travel time in which a speed of the vehicle is within a predetermined range to a predetermined period is equal to or greater than a predetermined value, or the ratio is less than the predetermined value,
wherein, in the storage means, the advice messages for each score indicating a state of fuel efficiency corresponding to the operation for driving the vehicle further includes an advice message for each vehicle speed state, and
wherein, when the selected driving operation is the operation for driving the vehicle, the display means reads from the storage means an advice message corresponding to the determined vehicle speed state, among the advice messages corresponding to the selected driving operation and the determined score, and displays the advice message thus read.

**8.** The apparatus of claim 7, wherein the predetermined range includes a first range above a first threshold, and
wherein the determination means determines the vehicle speed state by determining whether a ratio of a first travel time in which the speed of the vehicle is within the first range to the predetermined period is equal to or greater than a first predetermined value, or the ratio is less than the first predetermined value.

**9.** The apparatus of claim 8, wherein the predetermined range further includes a second range below a second threshold, and
wherein the determination means determines the vehicle speed state by determining whether a ratio of a first travel time in which the speed of the vehicle is within the first range to the predetermined period is equal to or greater than the first predetermined value, a ratio of a second travel time in which the speed is within the second range to the predetermined period is equal to or greater than a second predetermined value, or the ratio of the first travel time to the predetermined period is less than the first predetermined value while the ratio of the second travel time to the predetermined period is less than the second predetermined value.

**10.** (Amended) The apparatus of any one of claims 1 to 9,
wherein, the driving-operation-based score determining means determines the driving-operation-based score by integrating, for each driving operation, the score determined every time the driving operation is detected in a predetermined period to calculate an integrated score value, and dividing the integrated score value by a duration of the driving operation in the predetermined period.

**11.** (Amended) The apparatus of any one of claims 1 to 10,
wherein the total score determining means determines the total score by integrating, for all the driving operations, the score determined every time any driving operation is detected in a predetermined period to calculate an integrated score value, and dividing the integrated score value by the length of the predetermined period.

**12.** (Amended) The apparatus of any one of claims 7 to 11, wherein the predetermined period is a period of the driving cycle.

**13.** (Amended) The apparatus of any one of claims 1 to 12, further comprising a means for transmitting at least one of the driving-operation-based score and the total score to a predetermined server,
wherein the server ranks the at least one of the driving-operation-based score and the total score thus received and at least one of the driving-operation-based score and the total score that are calculated by and received from another apparatus connected to and in communication with the server, and
wherein the display means receives from the server and displays a result of the ranking performed by the server.

**14.** (Amended) The apparatus of any one of claims 1 to 13, further comprising a means for transmitting the lifetime score to a predetermined server,
wherein the server ranks the received lifetime score and a lifetime score that is calculated by and received from another apparatus connected to and in communication with the server, and
wherein the display means receives from the server and displays a result of the ranking performed by the server.

Statement under Art. 19.1 PCT
Claim 1 is amended to include the contents of claims 10-12, 14. The invention as defined in claim 1 thus amended relates to determining, for each driving operation, a score indicating a state of fuel efficiency by referring to a predetermined map based on a vehicle operating state according to the driving operation and displaying an advice message corresponding to the score. The amendment clarifies that the map to be referred to is selected according to the value of a lifetime score calculated by integrating, over a plurality of driving cycle, the score determined in each driving cycle, which is described in S3, S6 of Figure 19 and paragraphs 0162-0163 of the present application.

In the cited reference 1, an advice is displayed based on a fuel consumption ratio. In the cited reference 2, a warning message regarding an item such as idling is displayed. In the cited reference 3, determining a total rank by, for example, averaging ranks for each item and displaying the total rank in a bar chart are described. In the cited references 4-6, a history or average of fuel efficiency is determined and displayed. However, the lifetime score of the present invention is calculated by integrating the total score, which is calculated for each driving cycle, over a plurality of driving cycles. Such a lifetime score and switching among advice messages by selecting a map according to the value of the lifetime score are not disclosed in any references.

According to the invention, because the total score represents a driving operation level of a driver regarding the fuel efficiency on a driving cycle basis, the lifetime score calculated by integrating the total score over a plurality of driving cycles represents the driving operation level which the driver has reached at the present time. Therefore, by selecting a map used for displaying an advice message according to the value of the lifetime score, an advice message appropriate to the present driving operation level of the driver can be displayed.
